# EUROPEAN PATENT APPLICATION

(11) **EP 3 608 363 A1**
(43) Date of publication of application: **12.02.2020**
(21) Application number: 18781337.3
(22) Date of filing: 04.04.2018
(51) Int. Cl.: C08L 9/00, B60C 1/00, B60C 15/06, B60C 17/00, C08J 3/20, C08K 3/04, C08K 3/36, C08K 5/3477, C08L 7/00

(54) **RUBBER COMPOSITION, METHOD FOR PRODUCING RUBBER COMPOSITION, AND TIRE**

(30) Priority: 07.04.2017 JP 2017077173; 07.04.2017 JP 2017077174; 16.06.2017 JP 2017119057
(71) Applicant: Bridgestone Corporation, Tokyo 104-8340 (JP)
(72) Inventor: TODA Takumi, Tokyo 104-8340 (JP); ISHIBASHI Kenta, Tokyo 104-8340 (JP); AKAHANE Hidenobu, Tokyo 104-8340 (JP); TAHARA Seiichi, Tokyo 104-8340 (JP); SONE Ryota, Tokyo 104-8340 (JP)
(74) Representative: Oxley, Robin John George
(86) International application number: PCT/JP2018/014492
(87) International publication number: WO 2018/186458

(57) **Abstract**

An object of the present disclosure is to provide a rubber composition having satisfactorily low hysteresis loss, while maintaining high wear resistance. In order to achieve the object, a rubber composition contains: a rubber component having diene-based rubber therein; and a tetrazine compound.

## Description

### TECHNICAL FIELD

The present invention relates to a rubber composition, a method for manufacturing the rubber composition, and a tire.

### BACKGROUND ART

There has recently been an increasing demand for fuel-efficient vehicles, whereby tires having low rolling resistance are needed. Accordingly, with regard to a rubber composition for use in tread or the like of a tire, those having low tanδ values and satisfactory low-heat-generation properties are in demand.

Satisfactory low-heat-generation properties of a rubber composition as described above can be realized by, for example, reducing a content of a reinforcing filler such as carbon black, silica and the like. However, reducing a content of a reinforcing filler in a rubber composition may simultaneously cause problems of a decrease in wear resistance of tread rubber and deterioration of reinforcing properties such as cutting resistance and chipping resistance of rubber.
Further, in a case where an inorganic filler like silica is blended with a rubber composition, the inorganic filler, silica in particular, tends to aggregate in the rubber composition (because of hydroxyl groups at a surface of silica particles), thereby necessitating improved dispersion of the filler in the rubber composition.

In view of this, there has been a demand for developing a technique of successfully improving low heat generation properties of a rubber composition without adversely affecting other physical properties such as strength thereof. For example, PTL 1 discloses a rubber composition containing a diene-based rubber component, a reinforcing filler and a compound having a specific amidine structure, wherein elastic modulus and tanδ of the rubber composition are improved due to better chemical interaction between the rubber component and the filler.
However, although the technique of PTL 1 enhances elastic modulus and reduces hysteresis loss of the rubber composition to some extent, it still has room for improvement in terms of further reduction of hysteresis loss.

### CITATION LIST

### Patent Literature

PTL 1: WO2014/501827

### SUMMARY OF THE INVENTION

### Technical Problems

An object of the present disclosure is to provide a rubber composition having satisfactorily low hysteresis loss, while maintaining high wear resistance. Another object of the present disclosure is to provide a method for manufacturing a rubber composition, which method enables production of a rubber composition having satisfactorily low hysteresis loss and satisfactorily improved dispersibility of a filler, while maintaining high elasticity. Yet another object of the present disclosure is to provide a tire having high wear resistance and low rolling resistance in a compatible manner.

A rubber composition of the present disclosure is characterized in that it contains: a rubber component having diene-based rubber therein; and a tetrazine compound.
The rubber composition having the aforementioned structure, when it is used with a reinforcing filler, can exhibit satisfactorily reduced hysteresis loss and satisfactorily enhanced wear resistance.

It is preferable that the rubber composition of the present disclosure further contains a reinforcing filler because then the rubber composition can exhibit satisfactorily low hysteresis loss and satisfactorily high wear resistance in a highly compatible manner.

Further, in the rubber composition of the present disclosure, the diene-based rubber preferably contains butadiene rubber and/or styrene butadiene rubber and more preferably contains butadiene rubber and/or styrene butadiene rubber and natural rubber because then the rubber composition can further improve wear resistance thereof.

Yet further, in the rubber composition of the present disclosure, the diene-based rubber preferably contains modified diene-based rubber because then the rubber composition can exhibit satisfactorily low hysteresis loss and satisfactorily high wear resistance in a further highly compatible manner.

Yet further, in the rubber composition of the present disclosure, the reinforcing filler preferably contains silica and more preferably a content of the silica in the reinforcing filler is equal to or higher than 70 mass % because then the rubber composition can exhibit satisfactorily low hysteresis loss and satisfactorily high wear resistance in a further highly compatible manner.

Yet further, it is preferable that the rubber composition of the present disclosure further contains carbon black because then the rubber composition can exhibit satisfactorily low hysteresis loss and satisfactorily high wear resistance in a further highly compatible manner.

Yet further, it is preferable that the rubber composition of the present disclosure further contains farnesene-based polymer because then the rubber composition can exhibit satisfactorily low hysteresis loss and satisfactorily high wear resistance in a further highly compatible manner.

Yet further, in the rubber composition of the present disclosure, a content of the tetrazine compound is preferably in the range of 0.1 to 5 parts by mass with respect to 100 parts by mass of the rubber component because then the rubber composition can exhibit satisfactorily low hysteresis loss and satisfactorily high wear resistance in a further highly compatible manner.

Yet further, in the rubber composition of the present disclosure, it is preferable that a substituent group in the tetrazine structure of the tetrazine compound has at least one element selected from N, O and F and it is more preferable that the tetrazine structure is at least one selected from 3,6-Di(2-pyridyl)-1,2,4,5-tetrazine and 3,6-Di(4-pyridyl)-1,2,4,5-tetrazine because then the rubber composition can exhibit satisfactorily low hysteresis loss and satisfactorily high wear resistance in a further highly compatible manner.

Yet further, it is preferable that the rubber composition of the present disclosure further contains a silane coupling agent, wherein the silane coupling agent is at least one selected from the group consisting of compounds represented by general formulae (I)-(IV) shown below.

**(R¹O)₃₋ₚ(R²)ₚSi-R³-Sₐ-R³-Si(OR¹)₃₋ᵣ(R²)ᵣ** ··· (I)

(In general formula (I), R¹ represents C₁₋₈ normal, cyclic or branched alkyl group or C₂₋₈ normal or branched alkoxyalkyl group or hydrogen atom and, when a plurality of R¹ exists, R¹s may be of either the same type or different types; R² represents C₁₋₈ normal, cyclic or branched alkyl group and, when a plurality of R² exists, R²s may be of either the same type or different types; R³ represents C₁₋₈ normal or branched alkylene group and, when a plurality of R³ exists, R³s may be of either the same type or different types; the average value of "a" is in the range of 2 to 6; and "p" and "r" may be either the same number or different numbers, the average values thereof are in the range of 0 to 3, respectively, and p and r cannot be 3 simultaneously.) 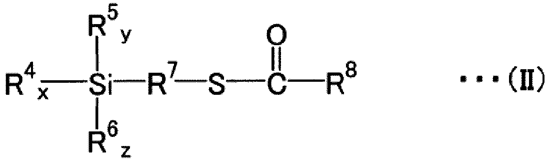 (In general formula (II), R⁴ represents a monovalent group selected from the group consisting of -Cl, -Br, R⁹O-, R⁹C(=O)O-, R⁹R¹⁰C=NO-, R⁹R¹⁰CNO-, R⁹R¹⁰N-, and -(OSiR⁹R¹⁰)h(OSiR⁹R¹⁰R¹¹), wherein each of R⁹, R¹⁰ and R¹¹ is hydrogen atom or C₁₋₁₈ monovalent hydrocarbon group, and the average value of "h" is in the range of 1 to 4; R⁵ is either equal to R⁴ or hydrogen atom or C₁₋₁₈ monovalent hydrocarbon group; R⁶ is either equal to R⁴, R⁵ or hydrogen atom or -[O(R¹²O)ⱼ]_{0.5}- group, wherein R¹² represents C₁₋₁₈ alkylene group and "j" is an integer in the range of 1 to 4; R⁷ represents C₁₋₁₈ divalent hydrocarbon group; R⁸ represents C₁₋₁₈ monovalent hydrocarbon group; and x, y and z are numbers satisfying the relationships: x + y + 2z = 3, 0 ≤ x ≤ 3, 0 ≤ y ≤ 2, 0 ≤ z ≤ 1.)

(R¹³O)₃₋ₛ(R¹⁴)ᵣSi-R¹⁵-Sₖ-R¹⁶-Sₖ-R¹⁵-Si(OR¹³)₃₋ₜ(R¹⁴)ₜ ··· (III)

(In general formula (III), R¹³ represents C₁₋₈ normal, cyclic or branched alkyl group or C₂₋₈ normal or branched alkoxyalkyl group or hydrogen atom and, when a plurality of R¹³ exists, R¹³s may be of either the same type or different types; R¹⁴ represents C₁₋₈ normal, cyclic or branched alkyl group and, when a plurality of R¹⁴ exists, R¹⁴s may be of either the same type or different types; R¹⁵ represents C₁₋₈ normal or branched alkylene group and, when a plurality of R¹⁵ exists, R¹⁵s may be of either the same type or different types; R¹⁶ represents a divalent group selected from the group consisting of (-S-R¹⁷-S-), (-R¹⁸-Sₘ₁-R¹⁹-) and (-R²⁰-Sₘ₂-R²¹-Sₘ₃-R²²-), wherein each of R¹⁷-R²² is either C₁₋₂₀ divalent hydrocarbon group or a divalent aromatic group or a divalent organic group including a hetero element other than sulfur and oxygen therein, the average values of m1, m2 and m3 are in the range of ≥ 1 and < 4, respectively; a plurality of "k" may be the same number or different numbers and the average value of "k" is in the range of 1 to 6; and the average values of "s" and "t" are in the range of 0 to 3, respectively, and s and t cannot be 3 simultaneously.) 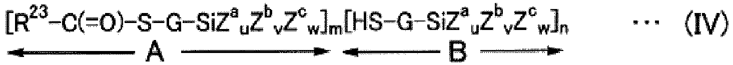 (In general formula (IV), R²³ represents C₁₋₂₀ normal, branched or cyclic alkyl group; a plurality of "G" represents C₁₋₉ alkanediyl groups or C₁₋₉ alkenediyl groups, respectively, and "G"s may be of either the same type or different types; each of "Z^{a}"s represents a functional group, which can be bonded to two silicon atoms and is selected from [-O-]_{0.5}, [-O-G-]_{0.5} and [-O-G-O-]_{0.5}, Z^{a}s may be of either the same type or different types; each of "Z^{b}"s represents a functional group, which can be bonded to two silicon atoms and is represented by [-O-G-O-]_{0.5}, Z^{b}s may be of either the same type or different types; each of "Z^{c}"s represents a functional group selected from the group consisting of -Cl, -Br, -OR^{a}, R^{a}C(=O)O-, R^{a}R^{b}C=NO-, R^{a}R^{b}N-, R^{a}-, and HO-G-O-("G" is defined in the same manner as described above), Z^{c}s may be of either the same type or different types; R^{a} and R^{b} represent C₁₋₂₀ normal, branched or cyclic alkyl groups, respectively; m, n, u, v and w are numbers satisfying the relationships: 1 ≤ m ≤ 20, 0 ≤ n ≤ 20, 0 ≤ u ≤ 3, 0 ≤ v ≤ 2, 0 ≤ w ≤ 1, and (u/2) + v + 2w = 2 or 3; when a plurality of "A" portion exists, "z^{a}ᵤ"s may be of either the same type or different types, "Z^{b}ᵥ"s may be of either the same type or different types, and "Z^{c}_{w}"s may be of either the same type or different types in the "A" portions; and when a plurality of "B" portion exists, "z^{a}ᵤ"s may be of either the same type or different types, "Z^{b}ᵥ"s may be of either the same type or different types, and "Z^{c}_{w}"s may be of either the same type or different types in the "B" portions.)
In a case where the rubber composition of the present disclosure further contains a silane coupling agent and the silane coupling agent is at least one selected from the group consisting of the compounds represented by general formulae (I)-(IV) described above, dispersibility of silica and further improves and thus hysteresis loss of the rubber composition can be further reduced.

In an aspect of a method for manufacturing a rubber composition of the present disclosure, the method includes a process of kneading ingredients consisting of a rubber component having diene-based rubber therein, a reinforcing filler, and a tetrazine compound.
It is possible to obtain a rubber composition having satisfactorily low hysteresis loss, while maintaining satisfactorily high wear resistance thereof, by the aforementioned aspect.

In another aspect of the aforementioned method for manufacturing the rubber composition of the present disclosure, the method preferably includes a process of preparing a preparatory master batch by kneading at least a portion of the rubber component and the tetrazine compound prior to kneading them with silica contained in the reinforcing filler. It is possible to achieve satisfactorily low hysteresis loss and satisfactorily high wear resistance of the rubber composition in a further highly compatible manner by the aforementioned aspect.

In yet another aspect of the method for manufacturing the rubber composition of the present disclosure, 10 mass % or more of the rubber component is used for preparation of the preparatory mater batch. It is possible to achieve satisfactorily low hysteresis loss and satisfactorily high wear resistance of the rubber composition in a further highly compatible manner by the aforementioned aspect.

In yet another aspect of a method for manufacturing a rubber composition of the present disclosure, the method includes a kneading process of kneading ingredients consisting of a rubber component (A) containing diene-based rubber therein, a tetrazine compound (B), a reinforcing filler (C) containing silica, at least one vulcanization accelerator (D) selected from the group consisting of guanidines, sulfenamides, thiazols, thiurams, dithiocarbamates, thioureas and xanthates, a silane coupling agent (E), and a vulcanization agent (F), wherein the kneading process includes: a first kneading step in which the rubber component (A), the tetrazine compound (B), the reinforcing filler (C), at least a portion of the vulcanization accelerator (D) and at least a portion of the silane coupling agent (E) are kneaded; and a second kneading step in which a kneaded substance obtained by the first kneading step is kneaded with the vulcanization agent (F). It is possible to obtain a rubber composition having satisfactorily low hysteresis loss and good dispersibility of the filler, while maintaining satisfactorily high elasticity thereof, by the aforementioned aspect.

In yet another aspect of the aforementioned method for manufacturing the rubber composition of the present disclosure, the first kneading step preferably includes a process of preparing a preparatory master batch by kneading at least a portion of the rubber component (A) and the tetrazine compound (B) prior to kneading them with silica contained in the reinforcing filler (C). It is possible to further improve dispersibility of the filler and further reduce hysteresis loss of the rubber composition by the aforementioned aspect.

In yet another aspect of the aforementioned method for manufacturing the rubber composition of the present disclosure, the maximum temperature of the kneaded substance obtained by the first kneading step is in the range of 120 °C to 190 °C. It is possible to further improve dispersibility of the filler and further reduce hysteresis loss of the rubber composition by the aforementioned aspect.

A tire of the present disclosure is characterized in that it uses the rubber composition of the present disclosure described above.
The tire can realize enhancement of wear resistance and reduction of rolling resistance in a compatible manner accordingly.

In the tire of the present disclosure, it is preferable that the rubber composition is applied to tread rubber, side rubber, side reinforcing rubber, cord-coating rubber, bead filler or rubber chafer because then the tire can fully exploit advantages brought by satisfactorily low hysteresis loss and satisfactorily high wear resistance of the rubber composition.

Further, the tire of the present disclosure is preferably applied to a tire for passenger vehicle, a studless tire, a run-flat tire, and a tire for truck and bus. Advantages obtained from achievement of satisfactorily low hysteresis loss and satisfactorily high wear resistance in a compatible manner can be effectively demonstrated in such tires.

According to the present disclosure, it is possible to provide a rubber composition having satisfactorily low hysteresis loss, while maintaining high wear resistance. Further, according to the present disclosure, it is possible to provide a method for manufacturing a rubber composition, which method enables production of a rubber composition having satisfactorily low hysteresis loss and satisfactorily improved dispersibility of a filler, while maintaining high wear resistance. Yet further, according to the present disclosure, it is possible to provide a tire having high wear resistance and low rolling resistance in a compatible manner.

### DESCRIPTION OF THE EMBODIMENTS

A rubber composition, a method for manufacturing the rubber composition, and a tire of the present disclosure will be demonstratively described in detail by embodiments thereof hereinafter.

### < Rubber composition >

The rubber composition of the present disclosure is characterized in that it contains: a rubber component having diene-based rubber therein; and a tetrazine compound. The tetrazine compound contained in the rubber composition modifies the rubber component, so that strong interactions are obtained between the rubber component and a reinforcing filler such as silica. As a result, it is possible to improve dispersibility of the reinforcing filler and achieve satisfactorily low hysteresis loss and satisfactorily high wear resistance of the rubber composition in a highly compatible manner.

### (Rubber component)

The rubber composition of the present disclosure further contains a rubber component having diene-based rubber therein.
The rubber composition, containing diene-based rubber as a rubber component by a certain amount, can improve wear resistance thereof. Further, the rubber component having the diene-based rubber therein modified by the tetrazine compound described below can have strong interactions between a reinforcing filler and itself.

The rubber component may be exclusively constituted of diene-based rubber. However, it is acceptable that the rubber component contains rubber other than diene-based rubber unless the non-diene-based rubber adversely affects the object of present disclosure.
A content of diene-based rubber in the rubber component is preferably ≥ 10 mass %, more preferably ≥ 20 mass %, and most preferably ≥ 30 mass %.

Types of rubber constituting the rubber component are not particularly restricted as long as the rubber component contains diene-based rubber therein and they may be appropriately selected in accordance with the performances as desired. Examples of the rubber include: diene-based rubber such as natural rubber (NR), butadiene rubber (BR, it should be noted that in the present disclosure "BR" represents polybutadiene as polymer of 1,3-butadiene and does not represent copolymer of butadiene and other polymers, etc.), isoprene rubber (IR), styrene-butadiene rubber (SBR), styrene-isoprene-butadiene rubber (SIBR), chloroprene rubber (CR), acrylonitrile-butadiene rubber (NBR); and non-diene-based rubber such as ethylene-propylene-diene rubber (EPDM), ethylene-propylene rubber (EPM), butyl rubber (IIR). Either a single type or combination of two or more types of these examples (which include diene-based rubber) may be appropriately selected for use.

With regard to the diene-based rubber, inclusion of butadiene rubber and/or styrene-butadiene rubber therein among the aforementioned examples is preferable because then it is possible to achieve satisfactorily low hysteresis loss and satisfactorily high wear resistance of the rubber composition in a further highly compatible manner. A total content of butadiene rubber and/or styrene-butadiene rubber in the diene-based rubber is preferably ≥ 20 mass % and more preferably ≥ 30 mass % because then it is possible to achieve satisfactorily low hysteresis loss and satisfactorily high wear resistance of the rubber composition in a further highly compatible manner.

Further, with regard to the diene-based rubber, inclusion of natural rubber and/or isoprene rubber therein, in addition to butadiene rubber and/or styrene-butadiene rubber, is preferable because then it is possible to improve other physical properties, as well as wear resistance, of the rubber composition.
A content of natural rubber and/or isoprene rubber in the rubber component is preferably ≥ 30 mass %, more preferably ≥ 50 mass %, and further more preferably ≥ 70 mass %.

The diene-based rubber may be either diene-based rubber that has not been modified (which may occasionally be referred to as "unmodified diene-based rubber" hereinafter) or diene-based rubber that has been modified (which may occasionally be referred to as "modified diene-based rubber" hereinafter). However, the diene-based rubber preferably contains modified diene-based rubber in terms of achieving satisfactorily low hysteresis loss and satisfactorily high wear resistance of the rubber composition in a further highly compatible manner. Although the diene-based rubber is modified by the tetrazine compound described below such that interactions between a reinforcing filler such as silica and itself is enhanced, it is possible to reliably improve dispersibility of a variety of fillers and thus ensure achieving satisfactorily low hysteresis loss and satisfactorily high wear resistance of the rubber composition in a further highly compatible manner by employing diene-based rubber that has been modified in advance so as to enhance i) interactions between itself and a reinforcing filler such as carbon black with which interactions do not well improve through modification by the tetrazine compound and ii) interactions between itself and other fillers, i.e. fillers other than a reinforcing filler.

The diene-based rubber may be constituted either exclusively of unmodified diene-based rubber or exclusively of modified diene-based rubber. However, a ratio of a modified diene-based rubber content (mass %) with respect to an unmodified diene-based rubber content (mass %), i.e. (content of modified diene-based rubber/content of unmodified diene-based rubber), is preferably in the range of 0.5 to 1 and more preferably in the range of 0.75 to 1 in terms of achieving satisfactorily low hysteresis loss and satisfactorily high wear resistance of the rubber composition in a further highly compatible manner.

In the present disclosure, the "modified diene-based rubber" represents diene-based rubber (such as butadiene rubber, styrene-butadiene rubber and natural rubber described above) having a modified functional group therein.
A position of the modified functional group is not particularly restricted and may be, for example, at a terminal of the main chain, inside the main chain, or exclusively within a region defined between a terminal of the main chain and a line distanced from the terminal toward the other terminal by a length of the total main chain length/4.
The number of the modified functional group is not particularly restricted, either, and may be appropriately selected according to necessity.

Type of a modification agent for modifying the diene-based rubber may be appropriately selected in accordance with the type of a modified functional group to be obtained.
For example, in a case where interactions between the modified rubber and silica are to be enhanced, examples of the modification agent include a modification agent having at least one compound represented by general formulae (I)-(X) shown below.

R¹ₐ-Si-(OR²)₄₋ₐ ··· (I)

In general formula (I), each of R¹ and R² independently represents C₁₋₂₀ monovalent aliphatic hydrocarbon or C₆₋₁₈ monovalent aromatic hydrocarbon group; "a" represents an integer in the range of 0 to 2; when a plurality of OR² exists, OR²s may be of either the same type or different types; and the molecule contains no active proton therein.

Specific examples of a compound (alkoxysilane compound) represented by general formula (I) include tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimethoxydimethylsilane, methylphenyldimethoxysilane, dimethyldiethoxysilane, vinyltrimethoxysilane, vinyltriethoxysilane, divinyldiethoxysilane, and the like. Tetraethoxysilane, methyltriethoxysilane and dimethyldiethoxysilane are preferable among these examples. Either a single type or combination of two or more types of these examples may be used in the present disclosure. 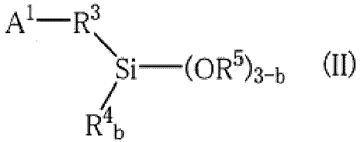 In general formula (II), A¹ represents a monovalent group having at least one functional group selected from the group consisting of epoxy, isocyanate, imine, carboxylic acid ester, carboxylic acid anhydride, cyclic tertiary amine, noncyclic tertiary amine, pyridine, silazane, and disulfide; R³ represents a single bond or a divalent hydrocarbon group; each of R⁴ and R⁵ independently represents C₁₋₂₀ monovalent aliphatic hydrocarbon or C₆₋₁₈ monovalent aromatic hydrocarbon group; "b" represents an integer in the range of 0 to 2; when a plurality of OR⁵ exists, OR⁵s may be of either the same type or different types; and the molecule contains no active proton therein.

Specific examples of an alkoxysilane compound represented by general formula (II) include an alkoxysilane compound having epoxy group, such as 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane. 3-glycidoxypropyltrimethoxysilane and 2-(3,4-epoxycyclohexyl)ethyltrimethoxysilane are preferable for use among these examples. 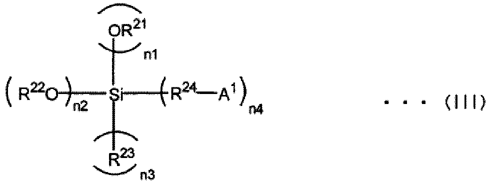 In general formula (III), n1 + n2 + n3 + n4 = 4, wherein n1, n2, n3 and n4 are integers in the range of 0 to 4, respectively, and n1 + n2 = an integer ≥ 1; A¹ represents at least one functional group selected from a residue of a saturated cyclic tertiary amine compound, a residue of an unsaturated cyclic tertiary amine compound, a ketimine residue, nitrile group, (thio)isocyanate group ("(thio)isocyanate group" comprehensively represents isocyanate group and thioisocyanate group in the present disclosure), (thio)epoxy group, trihydrocarbyl isocyanurate ester group, dihydrocarbyl carbonate ester group, nitrile group, pyridine group, (thio)ketone group, (thio)aldehyde group, amide group, (thio)carboxylic acid ester group, metal salt of (thio)carboxylic acid ester, a residue of carboxylic acid anhydride, a residue of carboxylic acid halide, and primary or secondary amino/mercapto group having a hydrolysable group; R²¹ represents C₁₋₂₀ monovalent aliphatic/alicyclic hydrocarbon group or C₆₋₁₈ monovalent aromatic hydrocarbon group, wherein R²¹s may be of either the same type or different types when n1 is ≥ 2; R²³ represents C₁₋₂₀ monovalent aliphatic/alicyclic hydrocarbon group or C₆₋₁₈ monovalent aromatic hydrocarbon group or a halogen atom (fluorine, chlorine, bromine, iodine), wherein R²³s may be of either the same type or different types when n3 is ≥ 2; R²² represents C₁₋₂₀ monovalent aliphatic/alicyclic hydrocarbon group or C₆₋₁₈ monovalent aromatic hydrocarbon group, which groups may include nitrogen atom and/or silicon atom, respectively, wherein R²²s may be of either the same type or different types or collectively form a ring when n2 is ≥ 2; and R²⁴ represents C₁₋₂₀ divalent aliphatic/alicyclic hydrocarbon group or C₆₋₁₈ divalent aromatic hydrocarbon group, wherein R²⁴s may be of either the same type or different types when n4 is ≥ 2. Trimethylsilyl group or tert-butyldimethylsilyl group are preferable and trimethylsilyl group is particularly preferable as a hydrolysable group of the aforementioned "primary or secondary amino/mercapto group having a hydrolysable group".
In the present disclosure, "C₁₋₂₀ monovalent aliphatic/alicyclic hydrocarbon group" comprehensively represents C₁₋₂₀ monovalent aliphatic hydrocarbon group and C₃₋₂₀ monovalent alicyclic hydrocarbon group. The same principle is applied when the term "monovalent" above is replaced with the term "divalent". 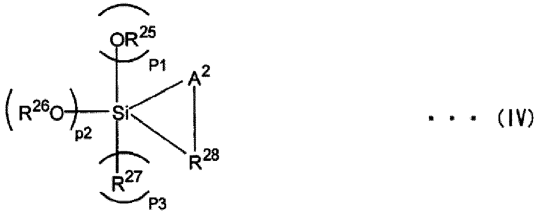 In general formula (IV), p1 + p2 + p3 = 2, wherein p1, p2 and p3 are integers in the range of 0 to 2, respectively, and p1 + p2 = an integer ≥ 1; A² represents NR^{a} (R^{a} represents a monovalent hydrocarbon group, a hydrolysable group or an organic group having nitrogen atom. Trimethylsilyl group or tert-butyldimethylsilyl group are preferable and trimethylsilyl group is particularly preferable as the hydrolysable group) or sulfur; R²⁵ represents C₁₋₂₀ monovalent aliphatic/alicyclic hydrocarbon group or C₆₋₁₈ monovalent aromatic hydrocarbon group, wherein R²⁵s may be of either the same type or different types or collectively form a ring when p1 = 2; R²⁷ represents C₁₋₂₀ monovalent aliphatic/alicyclic hydrocarbon group or C₆₋₁₈ monovalent aromatic hydrocarbon group or a halogen atom (fluorine, chlorine, bromine, iodine); R²⁶ represents C₁₋₂₀ monovalent aliphatic/alicyclic hydrocarbon group or C₆₋₁₈ monovalent aromatic hydrocarbon group/organic group containing nitrogen atom, which groups may include nitrogen atom and/or silicon atom, respectively, wherein R²⁶s may be of either the same type or different types or collectively form a ring when p2 = 2; and R²⁸ represents C₁₋₂₀ divalent aliphatic/alicyclic hydrocarbon group or C₆₋₁₈ divalent aromatic hydrocarbon group. 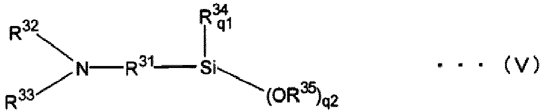 In general formula (V), q1 + q2 = 3, wherein q1 is an integer in the range of 0 to 2 and q2 is an integer in the range of 1 to 3; R³¹ represents C₁₋₂₀ divalent aliphatic/alicyclic hydrocarbon group or C₆₋₁₈ divalent aromatic hydrocarbon group; each of R³² and R³³ independently represents a hydrolysable group, C₁₋₂₀ monovalent aliphatic/alicyclic hydrocarbon group or C₆₋₁₈ monovalent aromatic hydrocarbon group; R³⁴ represents C₁₋₂₀ monovalent aliphatic/alicyclic hydrocarbon group or C₆₋₁₈ monovalent aromatic hydrocarbon group, wherein R³⁴s may be of either the same type or different types when q1 = 2; R³⁵ represents C₁₋₂₀ monovalent aliphatic/alicyclic hydrocarbon group or C₆₋₁₈ monovalent aromatic hydrocarbon group, wherein R³⁵s may be of either the same type or different types when q2 is ≥ 2; 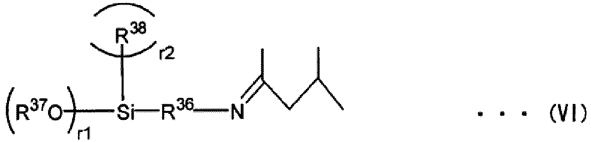 In general formula (VI), r1 + r2 = 3, wherein r1 is an integer in the range of 0 to 3 and r2 is an integer in the range of 0 to 2; R³⁶ represents C₁₋₂₀ divalent aliphatic/alicyclic hydrocarbon group or C₆₋₁₈ divalent aromatic hydrocarbon group; R³⁷ represents a group selected from dimethylaminomethyl, dimethylaminoethyl, diethylaminomethyl, diethylaminoethyl, methysilyl(methyl)laminomethyl, methysilyl(methyl)laminoethyl, methysilyl(ethyl)laminomethyl, methysilyl(ethyl)laminoethyl, dimethylsilylaminomethyl, dimethylsilylaminoethyl, C₁₋₂₀ monovalent aliphatic/alicyclic hydrocarbon or C₆₋₁₈ monovalent aromatic hydrocarbon groups, wherein R³⁷s may be of either the same type or different types when r1 is ≥ 2; and R³⁸ represents C₁₋₂₀ hydrocarbyloxy group, C₁₋₂₀ monovalent aliphatic/alicyclic hydrocarbon group or C₆₋₁₈ monovalent aromatic hydrocarbon group, wherein R³⁸s may be of either the same type or different types when r2 = 2. 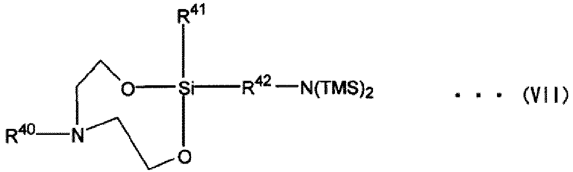 In general formula (VII), TMS represents trimethylsilyl group; R⁴⁰ represents trimethylsilyl group, C₁₋₂₀ monovalent aliphatic/alicyclic hydrocarbon group or C₆₋₁₈ monovalent aromatic hydrocarbon group; R⁴¹ represents C₁₋₂₀ hydrocarbyloxy group, C₁₋₂₀ monovalent aliphatic/alicyclic hydrocarbon group or C₆₋₁₈ monovalent aromatic hydrocarbon group; and R⁴² represents C₁₋₂₀ divalent aliphatic/alicyclic hydrocarbon group or C₆₋₁₈ divalent aromatic hydrocarbon group. 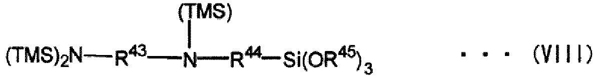 In general formula (VIII), TMS represents trimethylsilyl group; each of R⁴³ and R⁴⁴ independently represents C₁₋₂₀ divalent aliphatic/alicyclic hydrocarbon group or C₆₋₁₈ divalent aromatic hydrocarbon group; R⁴⁵ represents C₁₋₂₀ monovalent aliphatic/alicyclic hydrocarbon group or C₆₋₁₈ monovalent aromatic hydrocarbon group, wherein R⁴⁵s may be of either the same type or different types. 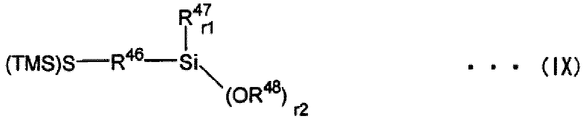 In general formula (IX), r1 + r2 = 3, wherein r1 is an integer in the range of 0 to 2 and r2 is an integer in the range of 1 to 3; TMS represents trimethylsilyl group; R⁴⁶ represents C₁₋₂₀ divalent aliphatic/alicyclic hydrocarbon group or C₆₋₁₈ divalent aromatic hydrocarbon group; and each of R⁴⁷ and R⁴⁸ independently represents C₁₋₂₀ monovalent aliphatic/alicyclic hydrocarbon group or C₆₋₁₈ monovalent aromatic hydrocarbon group, wherein R⁴⁷s and R⁴⁸s may be of either the same type or different types. 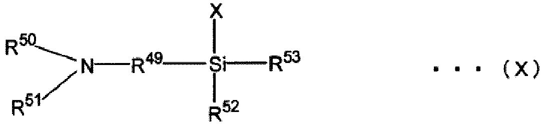 In general formula (X), "X" represents a halogen atom; R⁴⁹ represents C₁₋₂₀ divalent aliphatic/alicyclic hydrocarbon group or C₆₋₁₈ divalent aromatic hydrocarbon group; and each of R⁵⁰ and R⁵¹ independently represents a hydrolysable group, C₁₋₂₀ monovalent aliphatic/alicyclic hydrocarbon group or C₆₋₁₈ monovalent aromatic hydrocarbon group, or R⁵⁰ and R⁵¹ are bonded to each other to form a divalent organic group; each of R⁵² and R⁵³ independently represents halogen atom, hydrocarbyloxy group, C₁₋₂₀ monovalent aliphatic/alicyclic hydrocarbon group or C₆₋₁₈ monovalent aromatic hydrocarbon group. R⁵⁰ and R⁵¹ are preferably hydrolysable groups, and the hydrolysable group is preferably trimethylsilyl or tert-butyldimethylsilyl group and most preferably trimethylsilyl group.

The hydrocarbyloxysilane compounds represented by general formulae (III)-(X) described above are preferably alkoxysilane compounds.
Further, among the compounds represented by general formulae (I)-(X) described above, at least one selected from the group consisting of tetraoxysilane, N,N-bis(trimethylsilyl)-3-aminopropyltriethoxysilane, N,N-bis(trimethylsilyl)-3-aminopropylmethyldiethoxysilane, 3-dimethylaminopropyltriethoxysilane, 3-glycidoxypropyltriethoxysilane, and N-(1,3-dimethylbutylidene)-3-triethoxysilyl-1-propylamine is particularly preferable.

Further, in a case where interactions between the modified rubber and carbon black are to be enhanced, examples of the modification agent include those represented by general formulae (XI), (XII-1), (XII-2) and (XIII).

R'ₐSnX_{b} ··· (XI)

In general formula (XI), each of R's is independently selected from the group consisting of C₁₋₂₀ alkyl, C₃₋₂₀ cycloalkyl, C₆₋₂₀ aryl, and C₇₋₂₀ aralkyl groups; each of Xs independently represents chlorine or bromine; and "a" is in the range of 0 to 3, "b" is in the range of 1 to 4, wherein a + b = 4. Diene-based rubber modified by a tin-containing compound of general formula (XI) has at least one tin-carbon bond.

Specific examples of R' include methyl, ethyl, n-butyl, neophyl, cyclohexyl, n-octyl, 2-ethylhexyl groups, and the like.
Further, the tin-containing compound of general formula (XI) is preferably tin tetrachloride, R'SnCl₃, R'₂SnCl₂, R'₃SnCl, and the like and most preferably tin tetrachloride.

θ-C≡N ··· (XII-1)

θ-R-C≡N ··· (XII-2)

In general formulae (XII-1) and (XII-2), θ represents a heterocyclic group. Further, θ is preferably a heterocyclic group having a nitrogen atom, and/or at least one heterocyclic group selected from the group consisting of a heterocyclic group having an oxygen atom, a heterocyclic group having a sulfur atom, a heterocyclic group having two or more hetero atoms, and a heterocyclic group having at least one cyano group. Yet further, θ may be an aromatic heterocyclic group or a nonaromatic heterocyclic group such as thiophene, pyridine, furan, piperidine, dioxane. θ may be either monocyclic, bicyclic, tricyclic or multicyclic.

Specific examples of θ as described above include:
a heterocyclic group having nitrogen atom such as 2-pyridyl, 3-pyridyl, 4-pyridyl, pyrazinyl, 2-pyrimidinyl, 4-pyrimidinyl, 5-pyrimidinyl, 3-pyridazinyl, 4-pyridazinyl, N-methyl-2-pyrrolyl, N-methyl-3-pyrrolyl, N-methyl-2-imidazolyl, N-methyl-4-imidazolyl, N-methyl-5-imidazolyl, N-methyl-3-pyrazolyl, N-methyl-4-pyrazolyl, N-methyl-5-pyrazolyl, N-methyl-1,2,3-triazole-4-yl, N-methyl-1,2,3-triazole-5-yl, N-methyl-1,2,4-triazole-3-yl, N-methyl-1,2,4-triazole-5-yl, 1,2,4-triazine-3-yl, 1,2,4-triazine-5-yl, 1,2,4-triazine-6-yl, 1,3,5-triazinyl, N-methyl-2-pyrroline-2-yl, N-methyl-2-pyrroline-3-yl, N-methyl-2-pyrroline-4-yl, N-methyl-2-pyrroline-5-yl, N-methyl-3-pyrroline-2-yl, N-methyl-3-pyrroline-3-yl, N-methyl-2-imidazoline-2-yl, N-methyl-2-imidazoline-4-yl, N-methyl-2-imidazoline-5-yl, N-methyl-2-pyrazoline-3-yl, N-methyl-2-pyrazoline-4-yl, N-methyl-2-pyrazoline-5-yl, 2-quinolyl, 3-quinolyl, 4-quinolyl, 1-isoquinolyl, 3-isoquinolyl, 4-isoquinolyl, N-methylindole-2-yl, N-methylindole-3-yl, N-methylisoindole-1-yl, N-methylisoindole-3-yl, 1-indolizinyl, 2-indolizinyl, 3-indolizinyl, 1-phthalazinyl, 2-quinazolinyl, 4-quinazolinyl, 2-quinoxalinyl, 3-cinnolinyl, 4-cinnolinyl, 1-methylindazole-3-yl, 1,5-naphthyridine-2-yl, 1,5-naphthyridine-3-yl, 1,5-naphthyridine-4-yl, 1,8-naphthyfidine-2-yl, 1,8-naphthyridine-3-yl, 1,8-naphthyridine-4-yl, 2-pteridinyl, 4-pteridinyl, 6-pteridinyl, 7-pteridinyl, 1-methylbenzimidazole-2-yl, 6-phenanthridinyl, N-methyl-2-purinyl, N-methyl-6-purinyl, N-methyl-8-purinyl, N-methyl-β-carboline-1-yl, N-methyl-β-carboline-3-yl, N-methyl-β-carboline-4-yl, 9-acryldinyl, 1,7-phenanthoroline-2-yl, 1,7-phenanthoroline-3-yl, 1,7-phenanthoroline-4-yl, 1,10-phenanthoroline-2-yl, 1,10-phenanthoroline-3-yl, 1,10-phenanthoroline-4-yl, 4,7-phenanthoroline-1-yl, 4,7-phenanthoroline-2-yl, 4,7-phenanthoroline-3-yl, 1-phenazinyl, 2-phenazinyl, pyrrolidino, and piperidino;
a heterocyclic group having oxygen atom such as 2-furyl, 3-furyl, 2-benzo[b]furyl, 3-benzo[b]furyl, 1-isobenzo[b]furyl, 3-isobenzo[b]furyl, 2-naphtho[2,3-b]furyl, and 3-naphtho[2,3-b]furyl;
   a heterocyclic group having sulfur atom such as 2-thienyl, 3- thienyl, 2-benzo[b]thienyl, 3-benzo[b]thienyl, 1-isobenzo[b]thienyl, 3-isobenzo[b]thienyl, 2-naphtho[2,3-b]thienyl, and 3-naphtho[2,3-b]thienyl;
a heterocyclic group having two or more hetero atoms such as 2-oxazolyl, 4-oxazolyl, 5-oxazolyl, 3-isoxazolyl, 4-isoxazolyl, 5-isoxazolyl, 2-thiazolyl, 4-thiazolyl, 5-thiazolyl, 3-isothiazolyl, 4-isothiazolyl, 5-isothiazolyl, 1,2,3-oxaziazole-4-yl, 1,2,3-oxaziazole-5-yl, 1,3,4-oxaziazole-2-yl, 1,2,3-thiaziazole-4-yl, 1,2,3-thiaziazole-5-yl, 1,3,4-thiaziazole-2-yl, 2-oxazoline-2-yl, 2-oxazoline-4-yl, 2-oxazoline-5-yl, 3-isoxazolinyl, 4-isoxazolinyl, isoxazolinyl, 2-thiazoline-2-yl, 2-thiazoline-4-yl, 2-thiazoline-5-yl, 3-isothiazolinyl, 4-isothiazolinyl, 5-isothiazolinyl, 2-benzothiazolyl, and morpholino.
   Among these examples, θ is preferably a heterocyclic group having nitrogen atom and particularly preferably 2-pyridyl, 3-pyridyl or 4-pyridyl.

In respect of a preferable heterocyclic nitrile compound, specific examples thereof include:
a heterocyclic nitrile compound having a heterocyclic group containing nitrogen atom such as 2-pyridinecarbonitrile, 3-pyridinecarbonitrile, 4-pyridinecarbonitrile, pyradinecarbonitrile, 2-pyrimidinecarbonitrile, 4-pyrimidinecarbonitrile, 5-pyrimidinecarbonitrile, 3-pyridazinecarbonitrile, 4-pyridazinecarbonitrile, N-methyl-2-pyrrolecarbonitrile, N-methyl-3-pyrrolecarbonitrile, N-methyl-2-imidazolecarbonitrile, N-methyl-4-imidazolecarbonitrile, N-methyl-5-imidazolecarbonitrile, N-methyl-3-pyrazolecarbonitrile, N-methyl-4-pyrazolecarbonitrile, N-methyl-5-pyrazolecarbonitrile, N-methyl-1,2,3-triazole-4-carbonitrile, N-methyl-1,2,3-triazole-5-carbonitrile, N-methyl-1,2,4-triazole-3-carbonitrile, N-methyl-1,2,4-triazole-5-carbonitrile, 1,2,4-triazine-3-carbonitrile, 1,2,4-triazine-5-carbonitrile, 1,2,4-triazine-6-carbonitrile, 1,3,5-triazinecarbonitrile, N-methyl-2-pyrroline-2-carbonitrile, N-methyl-2-pyrroline-3-carbonitrile, N-methyl-2-pyrroline-4-carbonitrile, N-methyl-2-pyrroline-5-carbonitrile, N-methyl-3-pyrroline-2-carbonitrile, N-methyl-3-pyrroline-3-carbonitrile, N-methyl-2-imidazoline-2-carbonitrile, N-methyl-2-imidazoline-4-carbonitrile, N-methyl-2-imidazoline-5-carbonitrile, N-methyl-2-pyrazoline-3-carbonitrile, N-methyl-2-pyrazoline-4-carbonitrile, N-methyl-2-pyrazoline-5-carbonitrile, 2-quinolinecarbonitrile, 3-quinolinecarbonitrile, 4-quinolinecarbonitrile, 1-isoquinolinecarbonitrile, 3-isoquinolinecarbonitrile, 4-isoquinolinecarbonitrile, N-methylindole-2-carbonitrile, N-methylindole-3-carbonitrile, N-methyfisoindole-1-carbonitrile, N-methylisoindole-3-carbonitrile, 1-indolizinecarbonitrile, 2-indolizinecarbonitrile, 3-indolizinecarbonitrile, 1-phthalazinecarbonitrile, 2-quinazolinecarbonitrile, 4-quinazolinecarbonitrile, 2-quinoxalinecarbonitrile, 3-cinnolinecarbonitrile, 4-cinnolinecarbonitrile, 1-methylindazole-3-carbonitrile, 1,5-naphthyrizine-2-carbonitrile, 1,5-naphthyrizine-3-carbonitrile, 1,5-naphthyfizine-4-carbonitrile, 1,8-naphthyrizine-2-carbonitrile, 1,8-naphthyrizine-3-carbonitrile, 1,8-naphthyrizine-4-carbonitrile, 2-pteridinecarbonitrile, 4-pteridinecarbonitrile, 6-pteridinecarbonitrile, 7-pteridinecarbonitrile, 1-methylbenzimidazole-2-carbonitrile, phenanthridine-6-carbonitrile, N-methyl-2-purinecarbonitrile, N-methyl-6-purinecarbonitrile, N-methyl-8-purinecarbonitrile, N-methyl-β-carboline-1-carbonitrile, N-methyl-β-carboline-3-carbonitrile, N-methyl-β-carboline-4-carbonitrile, 9-acryldinecarbonitrile, 1,7-phenanthroline-2-carbonitrile, 1,7-phenanthroline-3-carbonitrile, 1,7-phenanthroline-4-carbonitrile, 1,10-phenanthroline-2-carbonitrile, 1,10-phenanthroline-3-carbonitrile, 1,10-phenanthroline-4-carbonitrile, 4,7-phenanthroline-1-carbonitrile, 4,7-phenanthroline-2-carbonitrile, 4,7-phenanthroline-3-carbonitrile, 1-phenazinecarbonitrile, 2-phenazinecarbonitrile, 1-pyrrolidinecarbonitrile, and 1-piperidinecarbonitrile;
a heterocyclic nitrile compound having a heterocyclic group containing oxygen atom such as 2-furonitrile, 3-furonitrile, 2-benzo[b]furancarbonitrile, 3-benzo[b]furancarbonitrile, isobenzo[b]furan-1-carbonitrile, isobenzo[b]furan-3-carbonitrile, naphtho[2,3-b]furan-2-carbonitrile, naphtho[2,3-b]furan-3-carbonitrile, and the like;
a heterocyclic nitrile compound having a heterocyclic group containing sulfur atom such as 2-thiophencarbonitrile, 3-thiophencarbonitrile, benzo[b]thiophen-2-carbonitrile, benzo[b]thiophen-3-carbonitrile, isobenzo[b]thiophen-1-carbonitrile, isobenzo[b]thiophen-3-carbonitrile, naphtho[2,3-b]thiophen-2-carbonitrile, naphtho[2,3-b]thiophen-3-carbonitrile, and the like;
a heterocyclic nitrile compound having a heterocyclic group containing two or more hetero atoms such as 2-oxazolecarbonitrile, 4-oxazolecarbonitrile, 5-oxazolecarbonitrile, 3-isoxazolecarbonitrile, 4-isoxazolecarbonitrile, 5-isoxazolecarbonitrile, 2-thiazolecarbonitrile, 4-thiazolecarbonitrile, 5-thiazolecarbonitrile, 3-isothiazolecarbonitrile, 4-isothiazolecarbonitrile, 5-isothiazolecarbonitrile, 1,2,3-oxazole-4-carbonitrile, 1,2,3- oxazole-5-carbonitrile, 1,3,4-oxazole-2-carbonitrile, 1,2,3-thiazole-4-carbonitrile, 1,2,3-thiazole-5-carbonitrile, 1,3,4-thiazole-2-carbonitrile, 2-oxazoline-2-carbonitrile, 2-oxazoline-4-carbonitrile, 2-oxazoline-5-carbonitrile, 3-isoxazolinecarbonitrile, 4-isoxazolinecarbonitrile, 5-isoxazolinecarbonitrile, 2-thiazoline-2-carbonitrile, 2-thiazoline-4- carbonitrile, 2-thiazoline-5-carbonitrile, 3-isothiazolinecarbonitrile, 4-isothiazolinecarbonitrile, 5-isothiazolinecarbonitrile, benzothiazole-2-carbonitrile, and 4-morpholinecarbonitrile, and the like;
a heterocyclic nitrile compound having two or more cyano groups such as 2,3-pyridinedicarbonitrile, 2,4-pyridinedicarbonitrile, 2,5-pyridinedicarbonitrile, 2,6-pyridinedicarbonitrile, 3,4-pyridinedicarbonitrile, 2,4-pyrimidinedicarbonitrile, 2,5-pyrimidinedicarbonitrile, 4,5-pyrimidinedicarbonitrile, 4,6-pyrimidinedicarbonitrile, 2,3-pyrazinedicarbonitrile, 2,5-pyrazinedicarbonitrile, 2,6-pyrazinedicarbonitrile, 2,3-furandicarbonitrile, 2,4-furandicarbonitrile, 2,5-furandicarbonitrile, 2,3-thiophendicarbonitrile, 2,4-thiophendicarbonitrile, 2,5-thiophendicarbonitrile, N-methyl-2,3-pyrroledicarbonitrile, N-methyl-2,4-pyrroledicarbonitrile, N-methyl-2,5-pyrroledicarbonitrile, 1,3,5-triazine-2,4-dicarbonitrile, 1,2,4-triazine-3,5-dicarbonitrile, 3,2,4-triazine-3,6-dicarbonitrile, 2,3,4-pyridinetricarbonitrile, 2,3,5-pyridinetricarbonitrile, 2,3,6-pyridinetricarbonitrile, 2,4,5-pyridinetricarbonitrile, 2,4,6-pyridinetricarbonitrile, 3,4,5-pyridinetricarbonitrile, 2,4,5-pyrimidinetricarbonitrile, 2,4,6-pyrimidinetricarbonitrile, 4,5,6-pyrimidinetricarbonitrile, pyrazinetricarbonitrile, 2,3,4-furantricarbonitrile, 2,3,5-furantricarbonitrile, 2,3,4-thiophenetricarbonitrile, 2,3,5-thiophenetricarbonitrile, N-methyl-2,3,4-pyrroletricarbonitrile, N-methyl-2,3,5-pyrroletricarbonitrile, 1,3,5-triazine-2,4,6-tricarbonitrile, 1,2,4-triazine-3,5,6-tricarbonitrile, and the like.
   Among these examples, 2-cyanopyridine(2-pyridinecarbonitrile), 3-cyanopyridine(3-pyridinecarbonitrile), and 4-cyanopyridine(4-pyridinecarbonitrile) are preferable.

(AM)Li(Q)y ··· (XIII)

[In general formula (XIII), y is 0 or in the range of 0.5 to 3; Q represents a solubilizing component selected from the group consisting of hydrocarbon, ethers, amines or a mixture thereof; and AM is represented by general formulae (XIII-1) or (XIII-2). 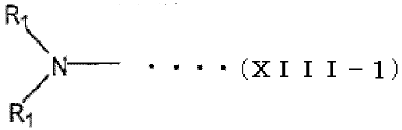 (In general formula (XIII-1), each of R¹s independently represents C₁₋₁₂ alkyl, cycloalkyl or aralkyl group.) 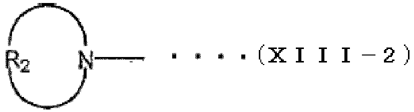 (In general formula (XIII-2), R² represents alkylene, substituted alkylene, oxy-alkylene or N-alkylamino-alkylene group having 3 to 16 methylene groups.)]

In general formula (XIII), (Q) is a solubilizing component, which may be any of hydrocarbon, ether, amine or a mixture thereof. The initiator (the modification agent) is soluble to a hydrocarbon solvent when the (Q) component exists in the former. Further, the (Q) group includes dienyl/vinyl aromatic polymers or dienyl/vinyl copolymers having a polymerization degree of 3 to 300 polymerization units. Examples of the polymers include polybutadiene, polystyrene, polyisoprene and copolymers thereof.
Other examples of (Q) include polar ligands such as tetrahydrofuran (THF) and tetramethylethylenediamine (TMEDA).
The (AM) component represents an amino functional group. Polymer having at least one functional group at a terminal thereof is synthesized by introducing the (AM) component at the initiating site or the head portion of the polymer.
When the solubilizing component (Q) is an ether or amino compound, an initiator can be generated by: preparing a solution of a functionalizing agent AM-H in an anhydrous, non-proton solvent such as cyclohexane under the presence of (Q); and adding, to the solution thus obtained, an organic lithium compound solved in the same or a similar solvent.
The organic lithium compound is represented by general formula RLi (in the formula, R is selected from the group consisting of low molecular weight polymers having short chain lengths constituted of ≤ 25 units derived from C₁₋₂₀ alkyls, cycloalkyls, alkenyls, aryls, aralkyls, diolefins and vinylaryl monomers).
Examples of the representative alkyls include n-butyl, s-butyl, methyl, ethyl, isopropyl, and the like. Preferable examples of the cycloalkyls include cyclohexyl, menthyl, and the like. Preferable examples of the alkenyl include allyl, vinyl, and the like.
Further, examples of the aryl group and aralkyl group include phenyl, benzyl, oligo(styryl), and the like. Examples of the short chain length polymers include oligo(butadienyl), oligo(isoprenyl), oligo(styryl), and the like, generated by oligomerization of adequate monomers initiated by organic lithium. The "in situ" method (a method described in JP 06-199921 A) can be preferably used in this regard. N-butyllithium is preferable as the organic lithium compound.

Type of the substituted amino group represented by general formula (XIII-1) in general formula (XIII) is not particularly restricted as long as the R¹ group of general formula (XIII-1) is C₁₋₁₂ alkyl, cycloalkyl or aralkyl group. Preferable examples of the R¹ group include methyl, ethyl, butyl, octyl, cyclohexyl, 3-phenyl-1-propyl, isobutyl, and the like. The R¹s of general formula (XIII-1) may be of either the same type or different types.
Type of the cyclic amino group represented by general formula (XIII-2) in general formula (XIII) is not particularly restricted as long as the R² group of general formula (XIII-2) is divalent alkylene, substituted alkylene, oxy-alkylene or N-alkylamino-alkylene group having 3 to 16 methylene groups.
The substituted alkylene includes an alkylene having 1 to 8 substituent groups. Examples of the preferable substituent group include C₁₋₁₂ linear or branched alkyl, cycloalkyl, bicycloalkyl, aryl, aralkyl groups, and the like. Preferable examples of R² group include trimethylene, tetramethylene, hexamethylene, oxydiethylene, N-alkylazadiethylene, dodecamethylene, hexadecamethylene, and the like.
There are many useful examples of cyclic amines (including cyclic/bicyclic amines substituted by alkyl, cycloalkyl, aryl or aralkyl). Examples of the cyclic amines, which are not restricted to such conventional, useful examples, include 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadece-9-en, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethy-3-azabicyclo[3.2.1]octane, 1-propyl-3-azabicyclo[3.2.2]nonane, 3-(t-butyl)-7-azabicyclo[4.3.0]nonane, 1,5,5-trimethyl-3-azabicyclo[4.4.0], and the like.

It is particularly preferable that the modification agent includes at least one selected from tin tetrachloride, 2-cyanopyridine and hexamethyleneimine among the compounds represented by general formulae (XI), (XII-1), (XII-2) and (XIII).

Regarding modification of the diene-based rubber described above, it is acceptable to modify one terminal of the diene-based rubber by using an organic alkali metal compound as polymerization initiator and then modify the other terminal thereof by using a modification agent containing the compound represented by general formulae (I)-(X).

An organic lithium compound is preferable as the organic alkali metal compound used as the polymerization initiator. Although type of the organic lithium compound is not particularly restricted, hydrocarbyllithium or a lithium amide compound is preferably used. It is possible to obtain a modified diene-based rubber having hydrocarbyl group at the polymerization initiated terminal and a polymerization active site at the other terminal in a case where the hydrocarbyllithium is used. The active terminal as the polymerization active site is then reacted with a hydrocarbyloxysilane compound containing nitrogen atom and silicon atom or a hydrocarbyloxysilane compound containing silicon atom, for modification. Alternatively, it is possible to obtain a modified diene-based rubber having a nitrogen-containing group at the polymerization initiated terminal and a polymerization active site at the other terminal in a case where the latter or the lithium amide compound is used. In this case, for example, a modified diene-based rubber in which hexamethyleneimine is bonded to the polymerization initiated terminal and the alkoxysilane compound is bonded to the other terminal thereof can be obtained.

The hydrocarbyllithium as the polymerization initiator preferably has C₂₋₂₀ hydrocarbyl group and examples thereof include ethyllithium, n-propyllithium, isopropyllithium, n-butyllithium, sec-butyllithium, tert-octyllithium, n-decyllithium, phenyllithium, 2-naphthyllithium, 2-butylphenyllithium, 4-butylphenyllithium, cyclohexyllithium, cyclopentyllithium, a product obtained by a reaction of diisopropenylbenzene and butyllithium, and the like. N-butyllithium is particularly preferable among these examples.
Further, examples of the lithium amide compound as the polymerization initiator include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, lithium methylphenethylamide, and the like. Among these examples, cyclic lithium amide such as lithium hexamethyleneimide, lithium pyrrolidide, lithium piperidide, lithium heptamethyleneimide, lithium dodecamethyleneimide is preferable and lithium hexamethyleneimide, lithium pyrrolidide are particularly preferable in terms of an interaction effect with carbon black and polymerization initiating capacity thereof.
In general, these lithium amide compound can be prepared in advance from a secondary amine and a lithium compound and then used for polymerization. Alternatively, these lithium amide compound may be prepared in a polymerization system in an "in -situ" manner.

The rubber component is modified by the tetrazine compound as described above. Accordingly, it is possible to: first obtain a modified rubber by subjecting the rubber composition of the present disclosure containing a tetrazine compound and a rubber component having diene-based rubber therein to modification by the tetrazine compound; and then use the modified rubber thus obtained as a rubber component constituting another rubber composition. That is, a rubber composition may be manufactured by: first modifying a rubber component by using the tetrazine compound prior to kneading the rubber component with a filler such as a reinforcing filler; and then kneading the rubber component thus modified, with the filler. More specifically, it is possible to divide the kneading process into a plurality of steps, to allocate each step to each type of silica/carbon black, when the reinforcing filler includes a plurality of silica types and/or carbon types. Alternatively, it is possible to mixing the rubber component, the tetrazine compound and a reinforcing filler such as carbon black at a first step of the kneading process and then blending silica with the mixture at a second step of the process.

### (Tetrazine compound)

The rubber composition of the present disclosure characteristically contains a tetrazine compound in addition to the aforementioned rubber component.
The tetrazine compound modifies the rubber component (the diene-based rubber in particular), so that an interaction effect between the rubber thus modified and a reinforcing filler such as silica can be enhanced.

The tetrazine compound is generally a compound having a tetrazine structure and represents a compound having a 1,2,4,5-tetrazine structure shown in a formula below in the present disclosure. 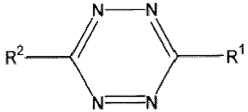 In the formula, each of R¹ and R² located in side chains of the tetrazine compound, respectively, represents substituted/unsubstituted C₁₋₁₁ hydrocarbon group.

Specific examples of the tetrazine compound include those shown below.

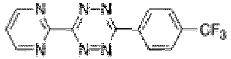

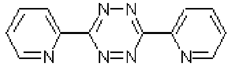

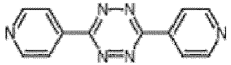

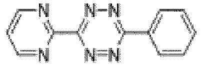

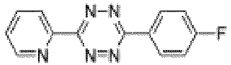

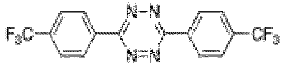

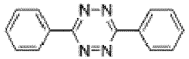

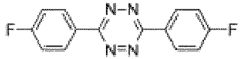

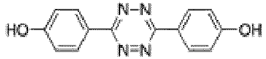

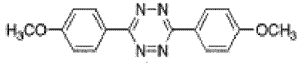

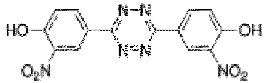

Further, specific examples of the tetrazine compound include 1,2,4,5-tetrazine, 3,6-bis(2-pyridyl)-1,2,4,5-tetrazine, 3,6-bis(3-pyridyl)-1,2,4,5-tetrazine, 3,6-bis(4-pyridyl)-1,2,4,5-tetrazine, 3,6-diphenyl-1,2,4,5-tetrazine, 3,6-dibenzyl-1,2,4,5-tetrazine, 3,6-bis(2-furanyl)-1,2,4,5-tetrazine, 3-methyl-6-(3-pyridyl)-1,2,4,5-tetrazine, 3,6-bis(3,5-dimethyl-1-pyrazolyl)-1,2,4,5-tetrazine, 3,6-bis(2-thienyl)-1,2,4,5-tetrazine, 3-methyl-6-(2-pyridyl)-1,2,4,5-tetrazine, 3,6-bis(4-hydroxyphenyl)-1,2,4,5-tetrazine, 3,6-bis(3-hydroxyphenyl)-1,2,4,5-tetrazine, 3,6-bis(2-pyrimidinyl)-1,2,4,5-tetrazine, 3,6-bis(2-pyrazyl)-1,2,4,5-tetrazine, and the like.

Among the tetrazine compounds described above, those in which at least one of R¹ and R² includes at least one element selected from N, O and F (i.e. a substituent group in the tetrazine structure has at least one element selected from N, O and F) are preferable, those in which at least one of R¹ and R² includes at least N is more preferable, those having nitrogen-containing heterocyclic rings are further more preferable, and those in which each of R¹ and R² has a nitrogen-containing heterocyclic ring is most preferable.
It is possible to increase an interaction effect between the rubber component and silica by modifying the rubber component, thereby successfully realizing satisfactorily low hysteresis loss and satisfactorily high wear resistance of the rubber composition.

From the same viewpoints as described above, the tetrazine compound is preferably at least one selected from 3,6-bis(2-pyridyl)-1,2,4,5-tetrazine (which will occasionally be referred to as "3,6-di(2-pyridyl)-1,2,4,5-tetrazine" hereinafter), 3,6-bis(3-pyridyl)-1,2,4,5-tetrazine (which will occasionally be referred to as "3,6-di(3-pyridyl)-1,2,4,5-tetrazine" hereinafter), 3,6-bis(4-furanyl)-1,2,4,5-tetrazine (which will occasionally be referred to as "3,6-di(2-furanyl)-1,2,4,5-tetrazine" hereinafter), 3-methyl-6-(3-pyridyl)-1,2,4,5-tetrazine, and 3-methyl-6-(2-pyridyl)-1,2,4,5-tetrazine. Further, from the same viewpoints as described above, the tetrazine compound is particularly preferably at least one selected from 3,6-bis(2-pyridyl)-1,2,4,5-tetrazine and 3,6-di(4-pyridyl)-1,2,4,5-tetrazine.

A content of the tetrazine compound is not particularly restricted as long as the content is sufficient to modify the rubber component. A content of the tetrazine compound is preferably 0.1 to 5 parts by mass, more preferably 0.5 to 4 parts by mass, and most preferably 1 to 3 parts by mass, with respect to 100 parts by mass of the rubber component in terms of achieving satisfactorily low hysteresis loss and satisfactorily high wear resistance of the rubber composition in a further highly compatible manner. The content of ≥ 0.1 parts by mass significantly ensures satisfactory modification of the rubber component and the content of ≤ 5 parts by mass prevents workability and scorch resistance of the rubber composition from deteriorating.

### (Reinforcing filler)

The rubber composition of the present disclosure preferably contains a reinforcing filler in addition to the rubber component and the tetrazine compound described above.
The reinforcing filler exhibits a strong interaction between the modified rubber component and itself, thereby improving dispersibility of the reinforcing filler in the rubber composition and thus low-hysteresis loss properties and wear resistance of the rubber composition.

Reinforcing fillers conventionally employed in the rubber industry can be used as the aforementioned reinforcing filler and examples thereof include carbon black, silica, talc, clay, aluminum hydroxide, titanium oxide, and the like.

The reinforcing filler preferably contains at least silica among the examples described above. Silica exhibits a particularly strong interaction between itself and the rubber component modified by the tetrazine compound, thereby achieving satisfactorily low hysteresis loss and satisfactorily high wear resistance of the rubber composition in a further highly compatible manner.
In this regard, in terms of achieving satisfactorily low hysteresis loss and satisfactorily high wear resistance of the rubber composition in a still further highly compatible manner, the reinforcing filler contains carbon black in addition to the silica described above.

A ratio of an amount (mass) of silica with respect to the total amount (mass) of the reinforcing filler, i.e. (amount of silica/the total amount of the reinforcing filler) × 100, is preferably 10 % to 100 % and more preferably 50 % to 100 % because then it is possible to achieve satisfactorily low hysteresis loss and satisfactorily high wear resistance of the rubber composition in a further highly compatible manner.
The ratio of an amount of silica with respect to the total amount of the reinforcing filler is preferably ≥ 70 % in terms of realizing still better low-hysteresis loss properties.

Type of the aforementioned silica is not particularly restricted and examples thereof include wet silica, colloidal silica, calcium silicate, aluminum silicate, and the like.
Silica is preferably wet silica and more preferably precipitated silica, among the examples described above, because such silicas exhibit good dispersibility and thus further improve the low-hysteresis loss properties and wear resistance of the rubber composition. "Precipitated silica" represents silica obtained by growing primary particles thereof in a reaction solution in a neutral to alkali pH range at relatively high temperature at the early step of production and then controllably making the reaction solution acidic, so that the primary particles coagulate.

The CTAB specific surface are (cetyltrimethylammonium bromide adsorption specific surface area) of the silica is preferably ≥ 70 m²/g, more preferably ≥ 150 m²/g, and further more preferably ≥ 180 m²/g. The larger surface area is the better in terms of obtaining a silica surface condition which is advantageous for dispersion. The CTAB specific surface area of silica, of ≥ 70 m²/g, ensures satisfactorily high wear resistance and satisfactorily low hysteresis loss of the rubber composition, as well as satisfactorily low viscosity in an unvulcanized state.
The CTAB specific surface area represents a value measured according to ASTM D3765-92. A CTAB specific surface area of silica is measured by assuming an adsorption cross sectional area per one molecule of cetyltrimethylammonium bromide (CTAB) on a silica surface to be 0.35 nm² and calculating a specific surface area (m²/g) of the silica based on an adsorbed amount of CTAB.

In this connection, the BET specific surface area of the silica is preferably ≥ 150 m²/g and more preferably ≥ 190 m²/g. The larger surface area is the better in terms of obtaining a silica surface condition which is advantageous for dispersion. The BET specific surface area of silica, of ≥ 150 m²/g, ensures satisfactorily high wear resistance and satisfactorily low hysteresis loss of the rubber composition, as well as satisfactorily low viscosity in an unvulcanized state.
The BET specific surface area represents a specific surface area determined by the BET method and can be measured in the present disclosure according to ASTM D4820-93.

Type of carbon black is not particularly restricted and, for example, any hard/soft carbon manufactured by the oil furnace method can be appropriately used. Carbon black of GPF, FEF, SRF, HAF, ISAF, IISAF, SAF grade is preferably used among the examples in terms of realizing still better low-hysteresis loss properties and higher wear resistance.

### (Farnesene-based polymer)

The rubber composition of the present disclosure preferably further contains farnesene-based polymer in addition to the rubber component, the tetrazine compound and the reinforcing filler because then wear resistance and low-heat generation properties of the rubber composition can be further improved.
In this regard, examples of the farnesene-based polymer include homopolymer of farnesene, copolymer of farnesene and aromatic vinyl, copolymer of farnesene and a conjugated diene compound, and the like. Homopolymer of farnesene includes polymer of α-farnesene, polymer of β-farnesene, and copolymer of α-farnesene and β-farnesene.

In respect of the copolymer of farnesene and aromatic vinyl, examples of the aromatic vinyl include styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, diphenylethylene having a tertiary amino group, and the like.
In respect of the copolymer of farnesene and a conjugated diene compound, examples of the conjugated diene compound include butadiene, isoprene, and the like.
Copolymer of farnesene and styrene (farnesene-styrene copolymer) or copolymer of farnesene and butadiene (farnesene-butadiene copolymer) is preferable among the examples described above in terms of achieving satisfactorily high wear resistance and satisfactorily low-heat generation properties of the rubber composition in a further highly compatible manner.

The weight average molecular weight (Mw) of the farnesene-based polymer is not particularly restricted but preferably in the range of 9,000 to 160,000 and more preferably in the range of 10,000 to 150,000. The weight average molecular weight of the farnesene-based polymer of ≥ 9,000 ensures satisfactorily high strength of the rubber composition and the weight average molecular weight of the farnesene-based polymer of ≤ 160,000 reliably suppresses deterioration of workability.
The molecular weight distribution (Mw/Mn) of the farnesene-based polymer is not particularly restricted, either, but preferably in the range of 1.0 to 2.0, more preferably in the range of 1.0 to 1.5, and further more preferably in the range of 1.0 to 1.3. It is possible to suppress uneven distribution of viscosity by setting the molecular weight distribution to be within the aforementioned ranges.

Melt viscosity of the farnesene-based polymer is not particularly restricted but preferably ≤ 1000 Pa · s, more preferably ≤ 200 Pa · s, and preferably ≥ 0.1 Pa · s, more preferably ≥ 0.5 Pa · s. The farnesene-based polymer is suitably applicable to a softening agent and a fuel consumption-reducing agent for tires and exhibits good bloom resistance when melt viscosity of the farnesene-based polymer is set to be within the aforementioned ranges.
In the present disclosure, melt viscosity represents a value measured at 38 °C by using a Brookfield-type viscometer manufactured by BROOKFIELD ENGINEERING LABS. INC.

A content of the farnesene-based polymer is preferably ≥ 1 parts by mass, more preferably ≥ 3 parts by mass, further more preferably ≥ 5 parts by mass, particularly preferably ≥ 8 parts by mass, and most preferably ≥ 15 parts by mass, with respect to 100 parts by mass of the rubber component. When the content is less than 1 parts by mass, a performance-improving effect caused by addition of the farnesene-based resin may not be sufficient. Further, the content is preferably ≤ 50 parts by mass, more preferably ≤ 40 parts by mass, and further more preferably ≤ 30 parts by mass. When the content exceeds 50 parts by weight, handling performance and wear resistance of the rubber composition tend to deteriorate.

The farnesene-based polymer can be synthesized by the known, conventional techniques.
For example, in a case of synthesis based on anion polymerization, liquid farnesene-based polymer can be obtained by: charging hexane, farnesene, sec-butyllithium and optionally vinyl monomer in a sufficiently nitrogen-substituted pressure-resistant vessel, raising temperature of the mixture and stirring it for several hours; and subjecting a polymerization solution thus obtained to quenching and vacuum-drying. Polymerization scheme is not particularly restricted in polymerization for preparing farnesene homopolymer. For example, all monomers may be polymerized at the same time or monomers may be added little by little for polymerization. Similarly, polymerization scheme is not particularly restricted in copolymerization for preparing farnesene-vinylmonomer copolymer. For example, all monomers may be copolymerized at the same time at random, or specific monomers (e.g. only farnesene monomers or only butadiene monomers) may be copolymerized in advance, so that the specific copolymer thus obtained is further copolymerized with the remaining monomers thereafter, or respective types of monomer may be separately copolymerized in advance, so that the plural types of copolymers thus obtained are subjected to block copolymerization thereafter.

The farnesene contained in the farnesene-based polymer may be either prepared from petroleum by chemical synthesis or extracted from insects such as aphids/plants such as apples. Farnesene is preferably prepared by cultivating microorganism by using a carbon source derived from a saccharide. Farnesene-based resin can be efficiently prepared by suing such farnesene as described above.

### (Vulcanization accelerator)

The rubber composition of the present disclosure preferably further contains a crosslinking (vulcanization) accelerator in addition to the rubber component, the tetrazine compound, the reinforcing filler and the farnesene-based polymer described above. The vulcanization accelerator contained in the rubber composition can enhance activity in coupling function of a silane coupling agent described below, thereby improving dispersibility of the reinforcing filler.
Type of the crosslinking accelerator is not particularly restricted. The crosslinking accelerator preferably includes at least one vulcanization accelerator selected from the group consisting of guanidine, sulfenamide, thiazole, thiuram, salt of dithiocarbamic acid, thiourea, and salt of xanthic acid in terms of improving dispersibility of the reinforcing filler.

Type of guanidine as the vulcanization accelerator is not particularly restricted and appropriately selected according to the application. Examples of the guanidine include 1,3-diphenylguranidine, 1,3-di-o-tolylguranidine, 1-(o-tolyl)biguanide, di-o-tolylguanidine salt of dicatechol borate, 1,3-di-o-cumenylguranidine, 1,3-di-o-biphenylguranidine, 1,3-di-o-cumenyl-2-propionylguranidine, and the like. Either a single type or combination of two or more types of these examples may be used in the present disclosure.
1,3-diphenylguranidine, 1,3-di-o-tolylguranidine and 1-(o-tolyl)biguanide are preferable and 1,3-diphenylguranidine is particularly preferable in terms of high reactiveity among these examples.

Type of sulfenamide as the vulcanization accelerator is not particularly restricted and appropriately selected according to the application. Examples of the sulfenamide include N-cyclohexyl-2-benzothiazolylsulfenamide, N,N-dicyclohexyl-2-benzothiazolylsulfenamide, N-tert-butyl-2-benzothiazolylsulfenamide, N-oxydiethylene-2-benzothiazolylsulfenamide, N-methyl-2-benzothiazolylsulfenamide, N-ethyl-2-benzothiazolylsulfenamide, N-propyl-2-benzothiazolylsulfenamide, N-butyl-2-benzothiazolylsulfenamide, N-pentyl-2-benzothiazolylsulfenamide, N-hexyl-2-benzothiazolylsulfenamide, N-octyl-2-benzothiazolylsulfenamide, N-2-ethylhexyl-2-benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiazolylsulfenamide, N,N-dibutyl-2-benzothiazolylsulfenamide, N,N-dipentyl-2-benzothiazolylsulfenamide, N,N-dihexyl-2-benzothiazolylsulfenamide, N,N-dioctyl-2-benzothiazolylsulfenamide, N,N-di-2-ethylhexylbenzothiazolylsulfenamide, N,N-didodecyl-2-benzothiazolylsulfenamide, N,N-distearyl-2-benzothiazolylsulfenamide, and the like. Either a single type or combination of two or more types of these examples may be used in the present disclosure.
N-cyclohexyl-2-benzothiazolylsulfenamide and N-tert-butyl-2-benzothiazolylsulfenamide are preferable in terms of high reactivity among these examples.

Type of thiazole as the vulcanization accelerator is not particularly restricted and can be appropriately selected according to the application. Examples of the thiazole include 2-mercaptobenzothiazole, 2,2'-bis(benzothiazolyl)disulfide, zinc salt of 2-mercaptobenzothiazole, cyclohexylamine salt of 2-mercaptobenzothiazole, 2-(N,N-diethylthiocarbamoylthio)benzothiazole, 2-(4'-morpholinodithio) benzothiazole, 4-methyl-2-mercaptobenzothiazole, di-(4-methyl-2-benzothiazolyl)disulfide, 5-chloro-2-mercaptobenzothiazole, sodium 2-mercaptobenzothiazole, 2-mercapto-6-nitrobenzothiazole, 2-mercapto-naphtho[1,2-d]thiazole, 2-mercapto-5-methoxybenzothiazole, 6-amino-2-mercaptobenzothiazole, and the like. These examples may be used by either a single type or in combination of two or more types in the present disclosure.
2-mercaptobenzothiazole and 2,2'-bis(benzothiazolyl)disulfide are preferable in terms of high reactivity among these examples.

Type of thiuram as the vulcanization accelerator is not particularly restricted and can be appropriately selected according to the application. Examples of the thiuram include tetramethylthiuram disulfide, tetraethylthiuram disulfide, tetrapropylthiuram disulfide, tetraisopropylthiuram disulfide, tetrabutylthiuram disulfide, tetrapentylthiuram disulfide, tetrahexylthiuram disulfide, tetraheptylthiuram disulfide, tetraoctylthiuram disulfide, tetranonylthiuram disulfide, tetradecylthiuram disulfide, tetradodecylthiuram disulfide, tetrastearylthiuram disulfide, tetrabenzylthiuram disulfide, tetrakis(2-ethylhexyl)thiuram disulfide, tetramethylthiuram monosulfide, tetraethylthiuram monosulfide, tetrapropylthiuram monosulfide, tetraisopropylthiuram monosulfide, tetrabutylthiuram monosulfide, tetrapentylthiuram monosulfide, tetrahexylthiuram monosulfide, tetraheptylthiuram monosulfide, tetraoctylthiuram monosulfide, tetranonylthiuram monosulfide, tetradecylthiuram monosulfide, tetradodecylthiuram monosulfide, tetrastearylthiuram monosulfide, tetrabenzylthiuram monosulfide, dipentamethylenethiuram tetrasulfide, and the like.
Tetrakis(2-ethylhexyl)thiuram disulfide and tetrabenzylthiuram disulfide are preferable in terms of high reactivity among these examples.

Type of salt of dithiocarbamic acid as the vulcanization accelerator is not particularly restricted and can be appropriately selected according to the application. Examples of the salt of dithiocarbamic acid include zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl) dithiocarbamate, zinc didecyldithiocarbamate, zinc didodecyldithiocarbamate, zinc N-pentamethylenedithiocarbamate, zinc N-ethyl-N-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl) dithiocarbamate, copper didecyldithiocarbamate, copper didodecyldithiocarbamate, copper N-pentamethylenedithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium N-pentamethylenedithiocarbamate, sodium dibenzyldithiocarbamate, ferric dimethyldithiocarbamate, ferric diethyldithiocarbamate, ferric dipropyldithiocarbamate, ferric diisopropyldithiocarbamate, ferric dibutyldithiocarbamate, ferric dipentyldithiocarbamate, ferric dihexyldithiocarbamate, ferric diheptyldithiocarbamate, ferric dioctyldithiocarbamate, ferric di(2-ethylhexyl)dithiocarbamate, ferric didecyldithiocarbamate, ferric didodecyldithiocarbamate, ferric N-pentamethylenedithiocarbamate, ferric dibenzyldithiocarbamate, and the like.
Zinc dibenzyldithiocarbamate, zinc N-ethyl-N-phenyldithiocarbamate, zinc dimethyldithiocarbamate and copper dimethyldithiocarbamate are preferable in terms of high reactivity among these examples.

Type of thiourea as the vulcanization accelerator is not particularly restricted and can be appropriately selected according to the application. Examples of the thiourea include thiourea, N,N'-diphenylthiourea, trimethylthiourea, N,N'-diethylthiourea, N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, o-tolylthiourea, and the like.
Thiourea, N,N'-diethylthiourea, trimethylthiourea, N,N'-diphenylthiourea, and N,N'-dimethylthiourea are preferable in terms of high reactivity among these examples.

Type of salt of xanthic acid as the vulcanization accelerator is not particularly restricted and can be appropriately selected according to the application. Examples of the salt of xanthic acid include zinc methyl xanthate, zinc ethyl xanthate, zinc propyl xanthate, zinc isopropyl xanthate, zinc butyl xanthate, zinc pentyl xanthate, zinc hexyl xanthate, zinc heptyl xanthate, zinc octyl xanthate, zinc 2-ethylhexyl xanthate, zinc decyl xanthate, zinc dodecyl xanthate, potassium methyl xanthate, potassium ethyl xanthate, potassium propyl xanthate, potassium isopropyl xanthate, potassium butyl xanthate, potassium pentyl xanthate, potassium hexyl xanthate, potassium heptyl xanthate, potassium octyl xanthate, potassium 2-ethylhexyl xanthate, potassium decyl xanthate, potassium dodecyl xanthate, sodium methyl xanthate, sodium ethyl xanthate, sodium propyl xanthate, sodium isopropyl xanthate, sodium butyl xanthate, sodium pentyl xanthate, sodium hexyl xanthate, sodium heptyl xanthate, sodium octyl xanthate, sodium 2-ethylhexyl xanthate, sodium decyl xanthate, sodium dodecyl xanthate, and the like.
Zinc isopropyl xanthate is preferable in terms of high reactivity among these examples.

The number of molecules (the number of moles) of the vulcanization accelerator is preferably 0.1 to 1.0 times as much as the number of molecules (the number of moles) of a silane coupling agent described below. When the number of molecules of the vulcanization accelerator is ≥ 0.1 times as much as the number of molecules of a silane coupling agent, the silane coupling agent will be satisfactorily activated. When the number of molecules of the vulcanization accelerator is ≤ 1.0 times as much as the number of molecules of a silane coupling agent, the vulcanization accelerator will not adversely affect the vulcanization rate. In this regard, the number of molecules (the number of moles) of the vulcanization accelerator is more preferably 0.2 to 0.6 times as much as the number of molecules (the number of moles) of the silane coupling agent.
The aforementioned vulcanization accelerator can be used as an accelerator of sulfur vulcanization, as well. Accordingly, the vulcanization accelerator may optionally be added by an appropriate amount at the second kneading step of the kneading process. In a case where the vulcanization accelerator is blended at the final step of the kneading process, type of the vulcanization accelerator is not restricted to the vulcanization accelerator of the present disclosure and a known, conventional vulcanization accelerator may be blended in an appropriate manner.

### (Silane coupling agent)

The rubber composition of the present disclosure preferably further contains a silane coupling agent in addition to the rubber component, the tetrazine compound, the reinforcing filler, the farnesene-based polymer and the crosslinking accelerator described above.
It is possible to enhance dispersibility of silica in the reinforcing filler and thus improve workability during rubber processing by adding a silane coupling agent to the rubber composition.

The silane coupling agent is preferably at least one compound selected from the group consisting of compounds represented by general formulae (I)-(IV) and a mercapto-based silane coupling agent. These compounds can further enhance dispersibility of silica in the reinforcing filler.

(R¹O)₃₋ₚ(R²)ₚSi-R³-Sₐ-R³-Si(OR¹)₃₋ᵣ(R²)ᵣ ··· (I)

In general formula (I), R¹ represents C₁₋₈ normal, cyclic or branched alkyl group or C₂₋₈ normal or branched alkoxyalkyl group or hydrogen atom and, when a plurality of R¹ exists, R¹s may be of either the same type or different types; R² represents C₁₋₈ normal, cyclic or branched alkyl group and, when a plurality of R² exists, R²s may be of either the same type or different types; R³ represents C₁₋₈ normal or branched alkylene group and, when a plurality of R³ exists, R³s may be of either the same type or different types; the average value of "a" is in the range of 2 to 6; and "p" and "r" may be either the same number or different numbers, the average values thereof are in the range of 0 to 3, respectively, and p and r cannot be 3 simultaneously.

Specific examples of the silane coupling agent represented by general formula (I) include bis[3-(triethoxysilyl)propyl]tetrasulfide, bis[3-(trimethoxysilyl)propyl]tetrasulfide, bis[3-(methyldimethoxysilyl)propyl]tetrasulfide, bis[2-(triethoxysilyl)ethyl]tetrasulfide, bis[3-(triethoxysilyl)propyl]disulfide, bis[3-(trimethoxysilyl)propyl]disulfide, bis[3-(methyldimethoxysilyl)propyl]disulfide, bis[2-(triethoxysilyl)ethyl]disulfide, bis[3-(triethoxysilyl)propyl]trisulfide, bis[3-(trimethoxysilyl)propyl]trisulfide, bis[3-(methyldimethoxysilyl)propyl]trisulfide, bis[2-(triethoxysilyl)ethyl]trisulfide, bis[3-(monoethoxydimethylsilyl)propyl]tetrasulfide, bis[3-(monoethoxydimethylsilyl)propyl]trisulfide, bis[3-(monoethoxydimethylsilyl)propyl]disulfide, bis[3-(monomethoxydimethylsilyl)propyl]tetrasulfide, bis[3-(monomethoxydimethylsilyl)propyl]trisulfide, bis[3-(monomethoxydimethylsilyl)propyl]disulfide, bis[2-(monoethoxydimethylsilyl)ethyl]tetrasulfide, bis[2-(monoethoxydimethylsilyl)ethyl]trisulfide, bis[2-(monoethoxydimethylsilyl)ethyl]disulfide, and the like. 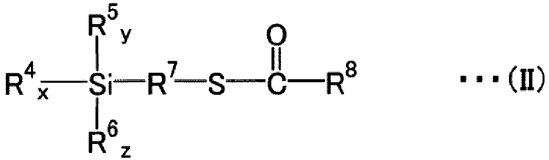 In general formula (II), R⁴ represents a monovalent group selected from the group consisting of -Cl, -Br, R⁹O- R⁹C(=O)O- , R⁹R¹⁰C=NO- , R⁹R¹⁰CNO- , R⁹R¹⁰N-, and -(OSiR⁹R¹⁰)h(OSiR⁹R¹⁰R¹¹), wherein each of R⁹, R¹⁰ and R¹¹ is hydrogen atom or C₁₋₁₈ monovalent hydrocarbon group, and the average value of "h" is in the range of 1 to 4; R⁵ is either equal to R⁴ or hydrogen atom or C₁₋₁₈ monovalent hydrocarbon group; R⁶ is either equal to R⁴, R⁵ or hydrogen atom or -[O(R¹²O)j]_{0.5}- group, wherein R¹² represents C₁₋₁₈ alkylene group and "j" is an integer in the range of 1 to 4; R⁷ represents C₁₋₁₈ divalent hydrocarbon group; R⁸ represents C₁₋₁₈ monovalent hydrocarbon group; and x, y and z are numbers satisfying the relationships: x + y + 2z = 3, 0 ≤ x ≤ 3, 0 ≤ y ≤ 2, and 0 ≤ z ≤ 1.)

In general formula (II), R⁸, R⁹, R¹⁰ and R¹¹ may be of either the same type or different types and each of which is preferably a group selected from the group consisting of C₁₋₁₈ normal, cyclic or branched alkyl, alkenyl, aryl and aralkyl groups; when R⁵ is a C₁₋₁₈ monovalent hydrocarbon group, R⁵ is preferably a group selected from the group consisting of normal, cyclic or branched alkyl, alkenyl, aryl and aralkyl groups; R¹² is preferably a normal, cyclic or branched alkylene group and particularly preferably a normal alkylene group; examples of R⁷ include C₁₋₁₈ alkylene, C₂₋₁₈ alkenylene, C₅₋₁₈ cycloalkylene, C₆₋₁₈ cycloalkylalkylene, C₆₋₁₈ arylene, C₇₋₁₈ aralkylene groups, wherein the alkylene group and the alkenylene group may be either normal or branched, the cycloalkylene, the cycloalkylalkylene, the arylene and the aralkylene groups may have a substituent group such as a lower alkyl group on the ring thereof; and R⁷ is preferably a C₁₋₆ alkylene group, and a normal alkylene group such as methylene, ethylene, trimethylene, tetramethylene, pentamethylene, hexamethylene is particularly preferable as R⁷.

Specific examples of the C₁₋₁₈ monovalent hydrocarbon as R⁵, R⁸, R⁹, R¹⁰ and R¹¹ in general formula (II) include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl, phenyl, tolyl, xylyl, naphthyl, benzyl, phenethyl, naphthylmethyl groups, and the like.
Examples of R¹² in general formula (II) include methylene, ethylene, trimethylene, tetramethylene, pentamethylene, hexamethylene, octamethylene, decamethylene, dodecamethylene groups, and the like.

Specific examples of the silane coupling agent represented by general formula (II) include 3-hexanoylthiopropyl triethoxysilane, 3-octanoylthiopropyl triethoxysilane, 3-decanoylthiopropyl triethoxysilane, 3-laroylthiopropyl triethoxysilane, 2-hexanoylthioethyl triethoxysilane, 2-octanoylthioethyl triethoxysilane, 2-decanoylthioethyl triethoxysilane, 2-laroylthioethyl triethoxysilane, 3-hexanoylthiopropyl trimethoxysilane, 3-octanoylthiopropyl trimethoxysilane, 3-decanoylthiopropyl trimethoxysilane, 3-laroylthiopropyl trimethoxysilane, 2-hexanoylthioethyl trimethoxysilane, 2-octanoylthioethyl trimethoxysilane, 2-decanoylthioethyl trimethoxysilane, 2-laroylthioethyl trimethoxysilane, and the like. 3-octanoylthiopropyl triethoxysilane (® "NXT Silane" manufactured by General Electric Silicones, Inc.) is particularly preferable.

(R¹³O)₃₋ₛ(R¹⁴)ₛSi-R¹⁵-Sₖ-R¹⁶-Sₖ-R¹⁵-Si(OR¹³)₃₋ₜ(R¹⁴)ₜ ··· (III)

In general formula (III), R¹³ represents C₁₋₈ normal, cyclic or branched alkyl group or C₂₋₈ normal or branched alkoxyalkyl group or hydrogen atom and, when a plurality of R¹³ exists, R¹³s may be of either the same type or different types; R¹⁴ represents C₁₋₈ normal, cyclic or branched alkyl group and, when a plurality of R¹⁴ exists, R¹⁴s may be of either the same type or different types; R¹⁵ represents C₁₋₈ normal or branched alkylene group and, when a plurality of R¹⁵ exists, R¹⁵s may be of either the same type or different types; R¹⁶ represents a divalent group selected from the group consisting of (-S-R¹⁷-S-), (-R¹⁸-Sₘ₁-R¹⁹-) and (-R²⁰-Sₘ₂-R²¹-Sₘ₃-R²²⁻), wherein each of R¹⁷-R²² is either C₁₋₂₀ divalent hydrocarbon group or a divalent aromatic group or a divalent organic group including a hetero element other than sulfur and oxygen therein, the average values of m1, m2 and m3 are in the range of ≥ 1 and < 4, respectively; a plurality of "k" may be the same number or different numbers and the average value of "k" is in the range of 1 to 6; and the average values of "s" and "t" are in the range of 0 to 3, respectively, and s and t cannot be 3 simultaneously.

Preferable examples of the silane coupling agent represented by general formula (III) specifically include the following compounds, which are represented by the average chemical composition, respectively:

(CH₃CH₂O)₃Si-(CH₂)₃-S₂-(CH₂)₆-S₂-(CH₂)₃-Si(OCH₂CH₃)₃;

(CH₃CH₂O)₃Si-(CH₂)₃-S₂-(CH₂)₁₀-S₂-(CH₂)₃-Si(OCH₂CH₃)₃;

(CH₃CH₂O)₃Si-(CH₂)₃-S₃-(CH₂)₆-S₃-(CH₂)₃-Si(OCH₂CH₃)₃;

(CH₃CH₂O)₃Si-(CH₂)₃-S₄-(CH₂)₆-S₄-(CH₂)₃-Si(OCH₂CH₃)₃;

(CH₃CH₂O)₃Si-(CH₂)₃-S-(CH₂)₆-S₂-(CH₂)₆-S-(CH₂)₃-Si(OCH₂CH₃)₃;

(CH₃CH₂O)₃Si-(CH₂)₃-S-(CH₂)₆-S₂.₅-(CH₂)₆-S-(CH₂)₃-Si(OCH₂CH₃)₃;

(CH₃CH₂O)₃Si-(CH₂)₃-S-(CH₂)₆-S₃-(CH₂)₆-S-(CH₂)₃-Si(OCH₂CH₃)₃;

(CH₃CH₂O)₃Si-(CH₂)₃-S-(CH₂)₆-S₄-(CH₂)₆-S-(CH₂)₃-Si(OCH₂CH₃)₃;

(CH₃CH₂O)₃Si-(CH₂)₃-S-(CH₂)₁₀-S₂-(CH₂)₁₀-S-(CH₂)₃-Si(OCH₂CH₃)₃;

(CH₃CH₂O)₃Si-(CH₂)₃-S₄-(CH₂)₆-S₄-(CH₂)₆-S₄-(CH₂)₃-Si(OCH₂CH₃)₃;

(CH₃CH₂O)₃Si-(CH₂)₃-S₂-(CH₂)₆-S₂-(CH₂)₆-S₂-(CH₂)₃-Si(OCH₂CH₃)₃;

(CH₃CH₂O)₃Si-(CH₂)₃-S-(CH₂)₆-S₂-(CH₂)₆-S₂-(CH₂)₆-S-(CH₂)₃-Si(OCH₂CH₃)₃;

and the like. 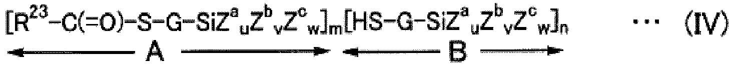 (In general formula (IV), R²³ represents C₁₋₂₀ normal, branched or cyclic alkyl group; a plurality of "G" represents C₁₋₉ alkanediyl groups or C₁₋₉ alkenediyl groups, respectively, and "G"s may be of either the same type or different types; each of "Z^{a}"s represents a functional group which can be bonded to two silicon atoms and is selected from [-O-]_{0.5}, [-O-G-]_{0.5} and [-O-G-O-]_{0.5}, Z^{a}s may be of either the same type or different types; each of "Z^{b}"s represents a functional group which can be bonded to two silicon atoms and is represented by [-O-G-O-]_{0.5}, Z^{b}s may be of either the same type or different types; each of "Z^{c}"s represents a functional group selected from the group consisting of -Cl, -Br, -OR^{a}, R^{a}C(=O)O-, R^{a}R^{b}C=NO-, R^{a}R^{b}N-, R^{a}-, and HO-G-O- ("G" is defined in the same manner as described above), Z^{c}s may be of either the same type or different types; R^{a} and R^{b} represent C₁₋₂₀ normal, branched or cyclic alkyl groups, respectively; m, n, u, v and w are numbers satisfying the relationships: 1 ≤ m ≤ 20, 0 ≤ n ≤ 20, 0 ≤ u ≤ 3, 0 ≤ v ≤ 2, 0 ≤ w ≤ 1, and (u/2) + v + 2w = 2 or 3; when a plurality of "A" portion exists, "Z^{a}ᵤ"s may be of either the same type or different types, "Z^{b}ᵥ"s may be of either the same type or different types, and "Z^{c}_{w}"s may be of either the same type or different types in the "A" portions; and when a plurality of "B" portion exists, "Z^{a}ᵤ"s may be of either the same type or different types, "Z^{b}ᵥ"s may be of either the same type or different types, and "Z^{c}_{w}"s may be of either the same type or different types in the "B" portions.)

Specific examples of the silane coupling agent represented by general formula (IV) include those represented by chemical formula (V), chemical formula (VI) and chemical formula (VII) shown below. 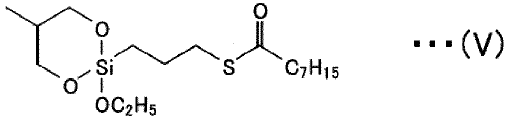 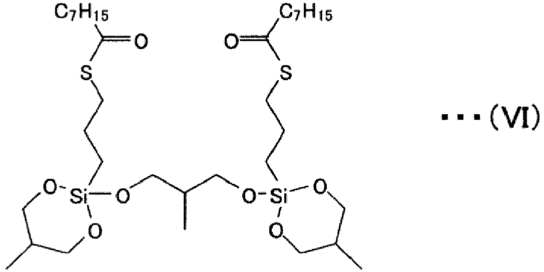 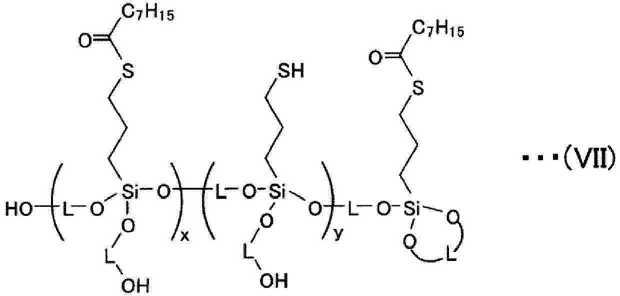 In chemical formula (VII), each of "L"s independently represents C₁₋₉ alkanediyl group or C₁₋₉ alkenediyl group, x = m, and y = n.

Examples of the silane coupling agent represented by chemical formula (V) include "NXT Low-V Silane"® manufactured by Momentive Performance Materials Inc., which is commercially available.
Examples of the silane coupling agent represented by chemical formula (VI) include "NXT Ultra Low-V Silane"® manufactured by Momentive Performance Materials Inc., which is commercially available.
Examples of the silane coupling agent represented by chemical formula (VII) include "NXT-Z"® manufactured by Momentive Performance Materials Inc.
Each of the silane coupling agents obtained by chemical formulae (II), (V) and (VI), having a protected mercapto group, can effectively prevent premature vulcanization or "scorch" from occurring in a process prior to the vulcanization process, thereby ensuring good workability.
Further, each of the silane coupling agents obtained by chemical formulae (V), (VI) and (VII), having a relatively large number of alkoxysilane carbons, can effectively prevent volatile organic compounds (VOCs), alcohols in particular, from being generated and therefore is preferable in terms of a working environment. The silane coupling agent of chemical formula (VII) is particularly preferable because it ensures satisfactory low-heat generation property among the tire performances.

Examples of the mercapto-based silane coupling agent include γ-mercaptopropylmethyldimethoxysilane, γ-mercaptopropyltnmethoxysilane, 3-[ethoxybis(3,6,9,12,15-pentaoxaoctacosane-1-yloxy)silyl]-1-propanethiol, and the like. 3-[ethoxybis(3,6,9,12,15-pentaoxaoctacosane-1-yloxy)silyl]-1-propanethiol (e.g. "Si363 ®" manufactured by Evonik Industries AG) is preferably used among these examples.

It is particularly preferable that the silane coupling agent contains, among the compounds represented by general formulae (I)-(IV), the compound represented by general formula (I) or the mercapto-based silane coupling agent described above.
The aforementioned examples of the silane coupling agent may be used by either a single type or in combination of two or more types in the present disclosure.

The amount to be added, of the silane coupling agent, is not particularly restricted but is preferably ≥ 2 parts by mass, more preferably in the range of 2 to 20 parts by mass, and further more preferably in the range of 4 to 12 parts by mass, with respect to 100 parts by mass of the rubber component.
Setting a content of the silane coupling agent to be within the aforementioned ranges advantageously improves reactivity with silica.

A ratio of an amount (mass) to be added, of the silane coupling agent with respect to an amount (mass) to be added, of the reinforcing filler, i.e. (an amount to be added, of the silane coupling agent/an amount to be added, of the reinforcing filler), is not particularly restricted and may be appropriately selected in accordance with the application. The ratio is preferably in the range of 0.01 to 0.20, more preferably in the range of 0.03 to 0.20, and particularly preferably in the range of 0.04 to 0.10.
Setting the aforementioned ratio (an amount to be added, of the silane coupling agent/an amount to be added, of the reinforcing filler) to be ≥ 0.01 ensures obtaining an effect of reducing heat generation of the rubber composition. Setting the aforementioned ratio to be ≤ 0.20 reduces a production cost of the rubber composition, thereby making the production economical.

### (Organic acid compound)

The rubber composition of the present disclosure preferably further contains an organic acid compound in addition to the rubber component, the tetrazine compound, the reinforcing filler, the farnesene-based polymer, the crosslinking accelerator, and the silane coupling agent described above.

Examples of the organic acid compound include: saturated aliphatic acid and unsaturated aliphatic acid such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linoleic acid, linolenic acid, nervonic acid; organic acid such as a resin acid like rosin acid and modified rosin acid; esters of the aforementioned saturated aliphatic acids, unsaturated aliphatic acids and resin acids.
50 mol % or more of the organic acid compound preferably consists of stearic acid in terms of ensuring its full functioning as a vulcanization accelerator auxiliary.

### (Vulcanization agent)

The rubber composition of the present disclosure preferably further contains a crosslinking (vulcanization) agent in addition to the rubber component, the tetrazine compound, the reinforcing filler, the farnesene-based polymer, the crosslinking accelerator, the silane coupling agent, and the organic acid compound described above.

Type of the crosslinking agent is not particularly restricted and examples thereof include sulfur, a bismaleimide compound, and the like.
Examples of the bismaleimide compound include N,N'-o-phenylene bismaleimide, N,N'-m-phenylene bismaleimide, N,N'-p-phenylene bismaleimide, N,N'-(4,4'-diphenylmethane)bismaleimide, 2,2-bis-[4-(4-maleimidophenoxy)phenyl]propane, bis(3-ethyl-5-methyl-4-maleimidophenyl)methane, and the like. N,N'-m-phenylene bismaleimide and N,N'-(4,4'-diphenylmethane)bismaleimide are preferably used in the present disclosure.
A content of the crosslinking agent is, for example, preferably in the range of 0.1 to 2.0 parts by mass, more preferably in the range of 1.0 to 2.0 parts by mass, and particularly preferably in the range of 1.2 to 1.8 parts by mass, with respect to 100 parts by mass of the rubber component.

### (Other components)

The rubber composition of the present disclosure may contain, in addition to the respective components described above, additives (other components) conventionally blended with a rubber composition unless addition of the other components adversely affects the intended effect of the present disclosure. For example, additives such as antioxidant, crosslinking accelerator auxiliary, glycerol fatty acid ester, softening agent, agent for preventing deterioration due to Ozone, surfactant, and the like, which are conventionally used in the rubber industry, may be appropriately blended with the rubber composition.

A conventionally known antioxidant is applicable to the present disclosure and type thereof is not particularly restricted. Examples of the antioxidant include phenol-based antioxidant, imidazole-based antioxidant, amine-based antioxidant, and the like. These examples of the antioxidant may be used by either a single type or in combination of two or more types in the present disclosure.

Examples of the crosslinking accelerator auxiliary include zinc white (ZnO), fatty acid, and the like. The fatty acid may be any of saturated, unsaturated, normal, branched fatty acids. The number of carbon atoms of the fatty acid, which is not particularly restricted, either, is, for example, in the range of 1 to 30 and preferably in the range of 15 to 30. Specific examples of the fatty acid include: naphthenic acid such as cyclohexanecarboxylic acid, alkylcyclopentanecarboxylic acid having a side chain; saturated fatty acid such as hexanoic acid, octanoic acid, decanoic acid (including a branched carboxylic acid like neodecanoic acid), dodecanoic acid, tetradecanoic acid, hexadecanoic acid, octadecanoic acid (stearic acid); unsaturated fatty acid such as methacrylic acid, oleic acid, linoleic acid, linolenic acid; resin acid such as rosin, toll-oil acid, abietic acid; and the like. These examples of the fatty acid may be used by either a single type or in combination of two or more types. Zinc white and stearic acid are suitable used in the present disclosure.

The rubber composition of the present disclosure preferably further contains glycerol fatty acid ester when the rubber composition contains silica as the reinforcing filler. In this case, it is possible to improve workability of the rubber composition and further reduce rolling resistance of a tire by applying the rubber composition to the tire. The glycerol fatty acid ester of the present disclosure is an ester of glycerin and at least two types of fatty acids. In this regard, glycerol fatty acid ester is generally a compound in which at least one of the three OH groups of glycerin is bonded to the COOH group of a fatty acid with an ester bond.
The glycerol fatty acid ester may be any of glycerol fatty acid monoester (a monoester component) in which one molecule of glycerin and one molecule of fatty acid have been subjected to esterification, glycerol fatty acid diester (a diester component) in which one molecule of glycerin and two molecules of fatty acid have been subjected to esterification, glycerol fatty acid triester (a triester component) in which one molecule of glycerin and three molecules of fatty acid have been subjected to esterification, and a mixture thereof. Glycerol fatty acid monoester, however, is preferable. In a case where the glycerol fatty acid ester is a mixture of glycerol fatty acid monoester, glycerol fatty acid diester and glycerol fatty acid trimester, contents of the respective ester types can be measured by gel permeation chromatography (GPC). The two fatty acids constituting glycerol fatty acid diester and the three fatty acids constituting glycerol fatty acid trimester may be of either the same type or different types.
The at least two types of fatty acids as a raw material of the glycerol fatty acid ester of the present disclosure (that is, the fatty acids constituting the glycerol fatty acid ester) are preferably C₈₋₂₂ fatty acids, more preferably C₁₂₋₁₈ fatty acids, further more preferably C₁₄₋₁₈ fatty acids, and most preferably C₁₆ fatty acids and C₁₈ fatty acids, in terms of obtaining satisfactory workability, low hysteresis properties, and fracture resistance of the rubber composition. Among the at least two types of fatty acids as a raw material of the glycerol fatty acid ester, a fatty acid component having the largest content and another fatty acid component having the second largest content are preferably a combination of a C₁₆ fatty acid and a C₁₈ fatty acid.
In a case where the glycerol fatty acid ester is an ester of glycerin, a C₁₆ fatty acid and a C₁₈ fatty acid, a mass ratio of the C₁₆ fatty acid with respect to the C₁₈ fatty acid (the C₁₆ fatty acid/the C₁₈ fatty acid) is preferably in the range of 90/10 to 10/90, more preferably in the range of 80/20 to 20/80, and further more preferably in the range of 75/25 to 25/75. Setting the mass ratio of the C₁₆ fatty acid with respect to the C₁₈ fatty acid to be within the aforementioned ranges further improves workability, low hysteresis properties, and fracture resistance of the rubber composition.

The rubber composition of the present disclosure preferably further includes a softening agent in terms of realizing satisfactory low hysteresis loss properties and wear resistance. Examples of the softening agent include naphthene-based base oil, paraffin-based base oil, aromatic base oil, and the like. A content of the softening agent is preferably in the range of 2 to 30 parts by mass with respect to 100 parts by mass of the rubber component. A content of the softening agent, exceeding 30 parts by mass with respect to 100 parts by mass of the rubber component, may cause the softening agent to ooze out of a surface of a resulting rubber product and/or may deteriorate wear resistance of the rubber product. Further, such a high content of the softening agent may cause the softening agent to interact with and shield a tetrazine portion of the modified rubber component, thereby reducing reactivity of the tetrazine portion and thus deteriorating low hysteresis properties and wear resistance of the rubber composition.
Use of naphthene-based base oil or paraffin-based base oil among the aforementioned examples of the softening agent is preferable and use of naphthene-based base oil is most preferable. Aromatic oil, containing aromatic components by relatively large contents, exhibits a high affinity with other relevant aromatic compounds and unpreferably inhibits a reaction between the other relevant aromatic compounds and polymer. In contrast, each of naphthene-based base oil and paraffin-based base oil easily dissipates into polymer (oils having low pour points easily dissipate into polymer) and causes an effect of facilitating a reaction between the other relevant aromatic compounds and the polymer.
Classification of a base oil into the naphthene-based base oil, the paraffin-based base oil and the aromatic base oil is determined based on a CA value, a CP value and a CN value of the base oil. For example, TDAE, SRAE, RAE, Black Oil, and the like are classified into the naphthene-based base oil. Spindle oil and paraffin oil are classified into the paraffin-based oil.
In this regard, a mixed oil such as "A/O Mix" manufactured by SANKYO YUKA KOGYO K.K., which is a mixture of a naphthene-based base oil and naphthene-based asphalt, also causes a satisfactory effect.
Steps at which such a lubricant oil as described above is to be blended is not particularly restricted. For example, the lubricant oil may be blended for oil extension at the step of manufacturing the rubber component or added when the rubber composition is kneaded.

### < Manufacturing method 1 of rubber composition >

Next, a method for manufacturing a rubber composition of the present disclosure will be described.
A method for manufacturing a rubber composition of the present disclosure characteristically has a process of kneading ingredients including a rubber component having diene-based rubber therein, a reinforcing filler, and a tetrazine compound.

It is possible to obtain a rubber composition having satisfactorily low hysteresis loss and satisfactorily high wear resistance in a highly compatible manner by blending the tetrazine compound as a blending component with the rubber component and the reinforcing filler and then kneading the mixture so that dispersibility of the reinforcing filler improves.

In the method for manufacturing a rubber composition of the present disclosure, it is preferable to prepare a preparatory master batch by kneading at least a portion of the rubber component and the tetrazine compound, prior to kneading them with the reinforcing filler. The tetrazine compound can most effectively enhance an interaction between the rubber component and the reinforcing filler in a state where the tetrazine compound has been captured inside the rubber component. Preparing the aforementioned preparatory master batch in advance ensures production of a rubber composition having satisfactorily low hysteresis loss and satisfactorily high wear resistance in a further improved manner.
In a case where the reinforcing filler contains silica, it is preferable to mix and knead at least a portion of the rubber component and the preparatory master batch, prior to kneading them with the silica. In respect of the preparatory master batch, it suffices that the preparatory master batch contains at least the rubber component and the tetrazine compound. However, it is acceptable to add a component other than silica, e.g. a reinforcing filler other than silica and other additives, into the preparatory master batch and mix and knead them.

In respect of a portion of the rubber component for use in preparation of the preparatory master batch, the portion is preferably ≥ 10 mass %, more preferably ≥ 20 mass %, and most preferably 100 mass % of the rubber component. Setting the portion of the rubber component to be within the aforementioned ranges preferably enhances an interaction between the rubber component and the reinforcing filler, thereby ensuring production of a rubber composition having still better low hysteresis loss properties and still higher wear resistance.

The aforementioned ingredients are the same as those components (the rubber component, the tetrazine-based component, the reinforcing filler and other components) described above in connection with the rubber composition.

### < Manufacturing method 2 of rubber composition >

A method for manufacturing a rubber composition of the present disclosure includes: a kneading process of kneading ingredients consisting of a rubber component (A) containing diene-based rubber therein, a tetrazine compound (B), a reinforcing filler (C) containing silica, at least one vulcanization accelerator (D) selected from the group consisting of guanidines, sulfenamides, thiazols, thiurams, dithiocarbamates, thioureas and xanthates, a silane coupling agent (E), and a vulcanization agent (F).
Further, in the present disclosure, the kneading process includes: a first kneading step in which the rubber component (A), the tetrazine compound (B), the reinforcing filler (C), at least a portion of the vulcanization accelerator (D) and at least a portion of the silane coupling agent (E) are kneaded; and a second kneading step in which the kneaded substance obtained by the first kneading step is kneaded with the vulcanization agent (F).

Type of a kneading device for use in kneading in the kneading process is not particularly restricted and may be appropriately selected according to an application. Examples of the kneading device include: a single-screw kneading extruder; a multi-screw kneading extruder (a continuous kneading device); a kneading device having gearing/non-gearing-type rotation rotors such as a Banbury mixer, an intermix kneader and the like; rolls (a batch-type kneader); and the like.
Conditions such as rotation speed of a rotor, ram pressure, temperature during kneading, type of the kneader in the kneading process may be appropriately selected.

### (First kneading step)

In the method for manufacturing a rubber composition of the present disclosure, the kneading process includes a first kneading step, in which the rubber component (A), the tetrazine compound (B), the reinforcing filler (C), at least a portion of the vulcanization accelerator (D) and at least a portion of the silane coupling agent (E) are kneaded.
In the first kneading step, the rubber component (A), the reinforcing filler (C), the silane coupling agent (E) and the like, i.e. materials other than the vulcanization-related components such as the vulcanization agent and the vulcanization accelerator, are blended, kneaded in advance, so that dispersibility of the reinforcing filler (C) into the rubber composition improves.

Further, in the first kneading step, the maximum temperature of the mixture is set preferably in the range of 120 °C to 190 °C, more preferably in the range of 130 °C to 175 °C, and particularly preferably in the range of 140 °C to 170 °C in terms of adequately enhancing activity of coupling function of the silane coupling agent (E). The "maximum temperature of the mixture" represents the temperature of the mixture highest in the first kneading step, which temperature is normally observed immediately after mixing.

In the first kneading step, it is preferable to at first blend, mix and knead the rubber component (A), the tetrazine compound (B), the reinforcing filler (C), and the silane coupling agent (E) and then add the vulcanization accelerator (D) for further kneading. In this case, dispersibility of the reinforcing filler (C) into the rubber composition further improves.

Further, in the first kneading step, it is preferable to prepare a preparatory master batch by kneading at least a portion of the rubber component (A) and the tetrazine compound (B), prior to kneading them with silica contained in the reinforcing filler (C). The tetrazine compound (B) can most effectively enhance an interaction between the rubber component (A) and the reinforcing filler (C) in a state where the tetrazine compound (B) has been captured inside the rubber component (A), i.e. in a state where the tetrazine compound has modified the main chain of the rubber component. Preparing the aforementioned preparatory master batch in advance further improves dispersibility of the reinforcing filler (C) and thus ensures obtaining a rubber composition having still better low hysteresis loss properties.
In respect of the preparatory master batch, it suffices that the preparatory master batch is obtained by kneading at least a portion of the rubber component (A) and the tetrazine compound (B), and optionally the preparatory master batch may further contain ingredients other than silica. That is, the remaining portion of the rubber component (A), and the blending ingredients other than silica, e.g. carbon black in the reinforcing filler (C), at least a portion of the vulcanization accelerator (D) and at least a portion of the silane coupling agent (E) may be either included in the preparatory master batch or added and kneaded with silica at a later step.

### (Second kneading step)

In the method for manufacturing a rubber composition of the present disclosure, the kneading process includes, in addition to the first kneading step, a second kneading step in which the kneaded substance obtained by the first kneading step is kneaded with the vulcanization agent (F). A rubber composition can be prepared by the kneading process described above.

The kneaded substance obtained by the first kneading step is kneaded with the vulcanization agent (F) at the second kneading step. In this regard, the ingredients which were not kneaded at the first kneading step nor an intermediate kneading step described below (specifically, such as a portion of the vulcanization accelerator (D) and/or a portion of the silane coupling agent (E)) may be kneaded with the vulcanization agent (F) at the second kneading step.

In the second kneading step, the maximum temperature of the mixture is set preferably in the range of 60 °C to 140 °C, more preferably in the range of 80 °C to 120 °C, and particularly preferably in the range of 90 °C to 120 °C.

In entering the second kneading step from the first kneading step, or entering the second kneading step from an intermediate kneading step in a case where the intermediate kneading step is carried out between the first kneading step and the second kneading step, it is preferable to enter the second kneading step after the temperature of the mixture has dropped by 10 °C or more from the temperature immediately after the completion of kneading at the first kneading step/the intermediate kneading step.

### (Intermediate kneading step)

In the method for manufacturing a rubber composition of the present disclosure, the kneading process may optionally include an intermediate kneading step between the first kneading step and the second kneading step. The intermediate kneading step is a step in which the kneaded substance prepared at the first kneading step is further subjected to kneading.
The vulcanization agent (F) is not added at the intermediate kneading step. The intermediate kneading step may be carried out plural times repeatedly.

Components other than the vulcanization agent (F), among the ingredients which were not kneaded at the first kneading step, which components are specifically such as a portion of the vulcanization accelerator (D) and/or a portion of the silane coupling agent (E), may be blended, kneaded at the intermediate kneading step.

In respect of kneading at the intermediate kneading step, the maximum temperature of the mixture is set preferably in the range of 120 °C to 190 °C, more preferably in the range of 130 °C to 175 °C, and particularly preferably in the range of 140 °C to 170 °C in terms of adequately enhancing activity of coupling function of the silane coupling agent (E).

The aforementioned ingredients are the same as those components (the rubber component, the tetrazine-based component, the reinforcing filler, the vulcanization accelerator, the silane coupling agent, the vulcanization agent, the organic acid compound, and other components) described above in connection with the rubber composition.

### < Tire >

A tire of the present disclosure characteristically uses the rubber composition of the present disclosure described above. The tire, containing the rubber composition of the present disclosure as a tire material, can achieve improvement of wear resistance and reduction of rolling resistance in a compatible manner.
The tire of the present disclosure can be manufactured according to the conventional method without any particular restrictions, except that the rubber composition of the present disclosure is to be used for at least one of structural members of the tire. Examples of gas with which the tire is inflamed include untreated ambient air, ambient air of which oxygen partial pressure has been adjusted, and inert gas such as nitrogen, argon and helium.

The rubber composition of the present disclosure, which is to be used for at least one of structural members of the tire, is preferably applied to tread rubber, sidewall rubber, cord/fiber coating rubber, bead filler or rubber chafer among the structural members of the tire. It is possible to fully exploit advantages brought by satisfactorily low hysteresis loss and satisfactorily high wear resistance realized by the rubber composition of the present disclosure, by applying the rubber composition to these structural members of the tire.

Type of the tire of the present disclosure is not particularly restricted but preferably tire for passenger vehicle, studless tire, run-flat tire, or tire for truck and bus, in terms of effectively achieving improvement of wear resistance and reduction of rolling resistance in a compatible manner.

### EXAMPLES

The present disclosure will be described further in detail hereinafter by the following Examples, which do not restrict the present disclosure by any means.

### [Example Group 1]

(Samples 1-1 to 1-10, 2-1 to 2-10, 3-1 to 3-10, 4-1 to 4-10, 5-1 to 5-10, 6-1 to 6-10, 7-1 to 7-10, 8-1 to 8-10, 9-1 to 9-10, 10-1 to 10-8, and 11-1 to 11-15)
Samples of rubber compositions according to the blending formulations shown in Tables 1 to 6 were prepared by kneading the relevant ingredients by using a blast mill. In respect of kneading of the ingredients, a group of samples in each of which a preparatory master batch obtained by kneading at least a portion of the rubber component and the tetrazine compound in advance was kneaded with the remaining ingredients; and another group of samples in each of which the ingredients were kneaded all together, were prepared, respectively, as shown in Tables 1 to 6.
The tanδ value and wear resistance were evaluated for each of the samples thus prepared by the following methods.

### (1) Wear resistance

An amount of wear (mm³) was measured for each sample by: obtaining vulcanized rubber by vulcanizing a rubber composition of the sample at 160 °C for 15 minutes; cutting a disc-shaped test piece (diameter: 16.2 mm × thickness: 6 mm) out of the vulcanized rubber thus obtained; and carrying out the DIN wear test according to JIS-K6264-2:2005 at the room temperature by using the test piece, to measure an amount of wear (mm³).
Wear resistance was then determined by: calculating the invert of the wear amount thus measured; and converting the invert to an index value relative to the relevant invert, of one of Samples 1-1, 2-1, 3-1, 4-1, 5-1, 6-1, 7-1, 8-1, 9-1, 10-1 and 11-1, being "100". The larger index value represents the smaller wear amount and thus the higher wear resistance. The evaluation results are shown in Tables 1 to 11.

### (2) tanδ (low hysteresis loss properties)

A loss tangent (tanδ) value was measured for each sample by: obtaining vulcanized rubber by vulcanizing a rubber composition of the sample at 160 °C for 15 minutes; and measuring a loss tangent (tanδ) value of the vulcanized rubber thus obtained, by using a spectrometer (manufactured by Ueshima Sesakusho Co., Ltd.) under the conditions of temperature: 60 °C, initial strain: 2%, dynamic strain: 1%, and frequency: 52 Hz.
The tanδ value was expressed by an index value relative to the relevant tanδ value, of one of Samples 1-1, 2-1, 3-1, 4-1, 5-1, 6-1, 7-1, 8-1, 9-1, 10-1 and 11-1, being "100". The smaller index value represents the better low heat generation properties. The evaluation results are shown in Tables 1 to 11.

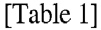

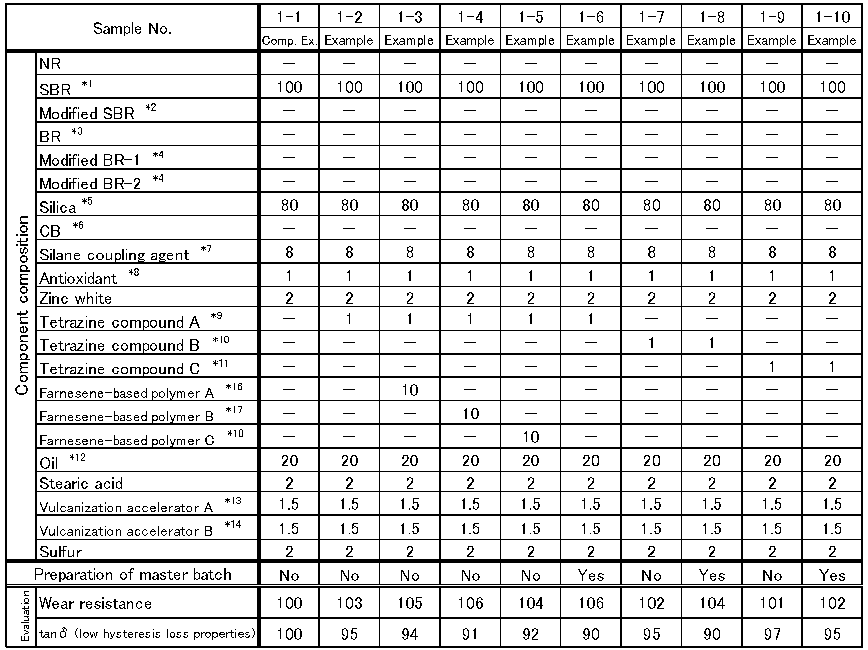

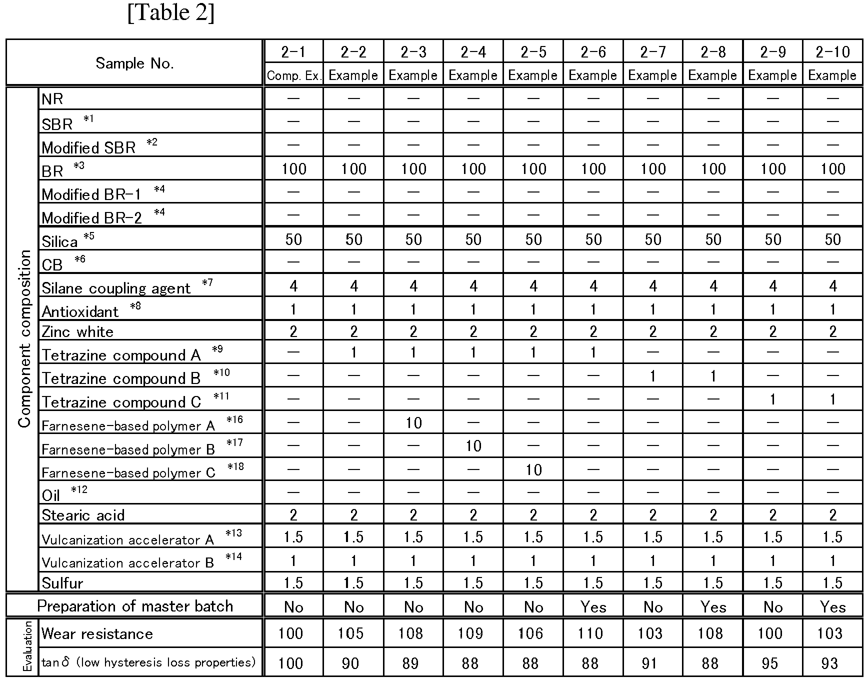

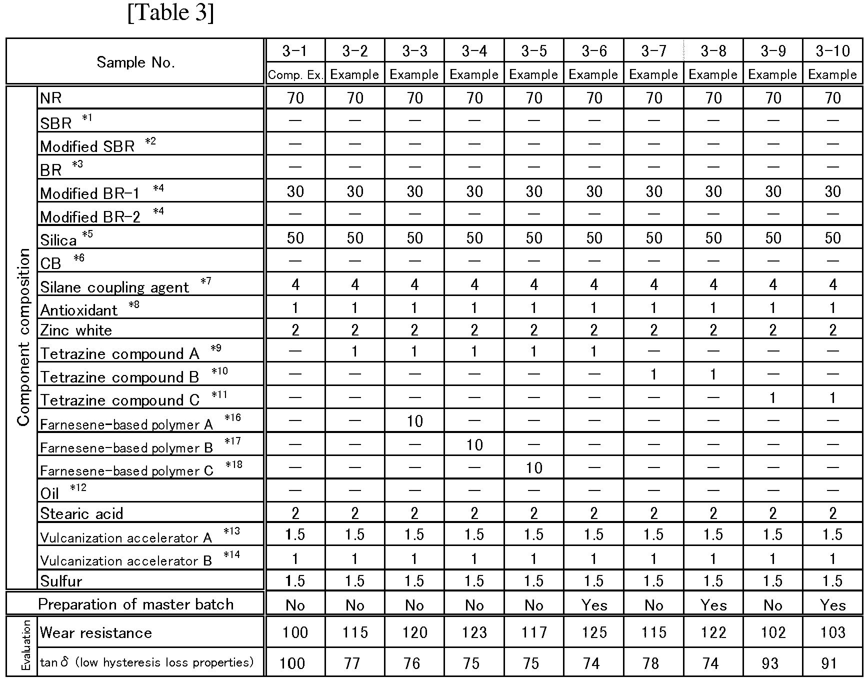

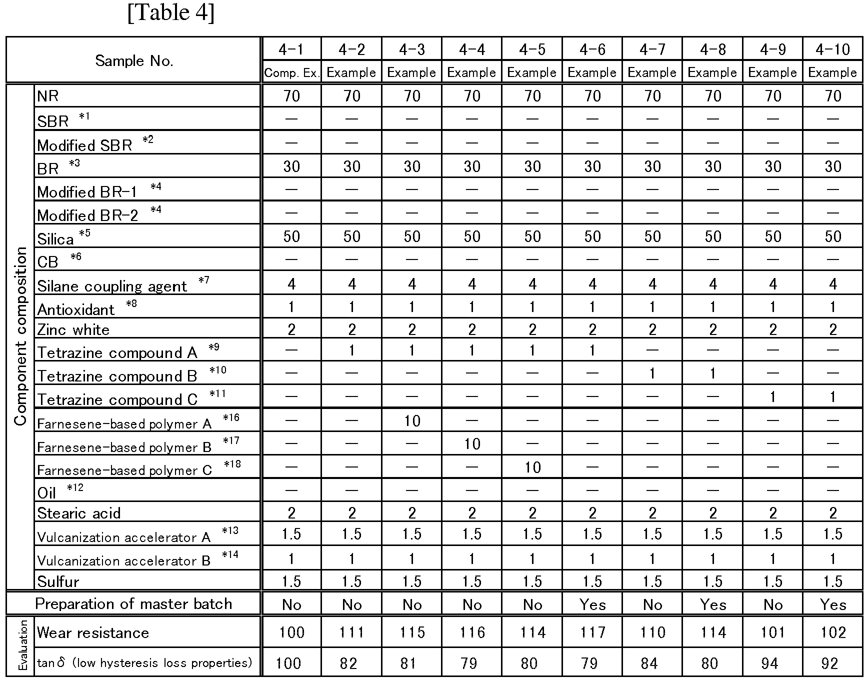

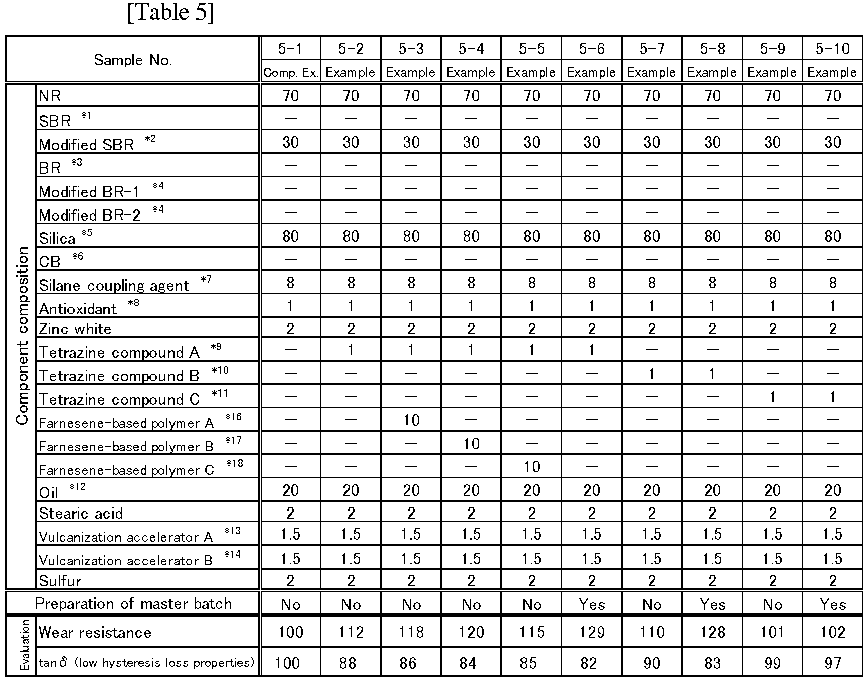

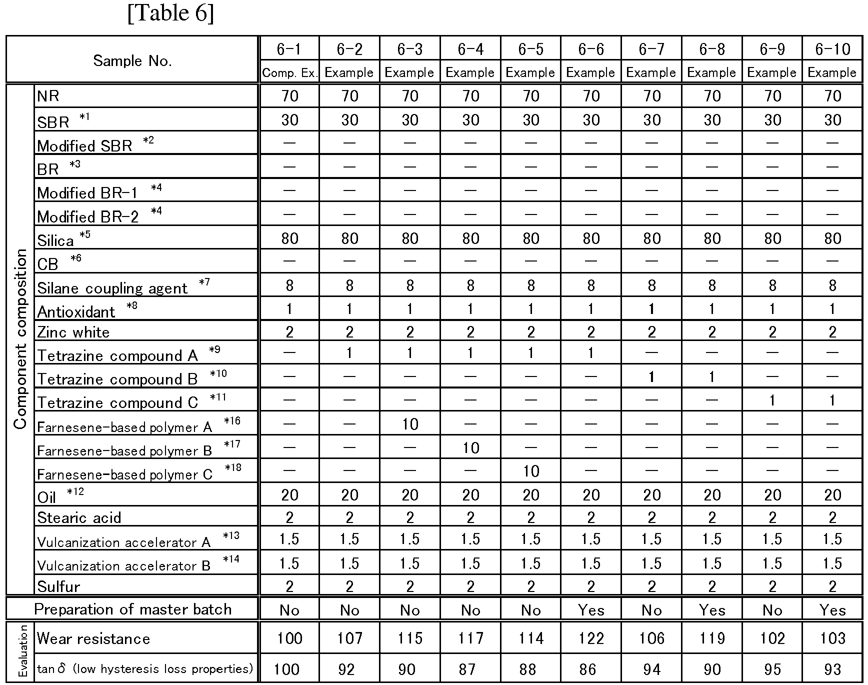

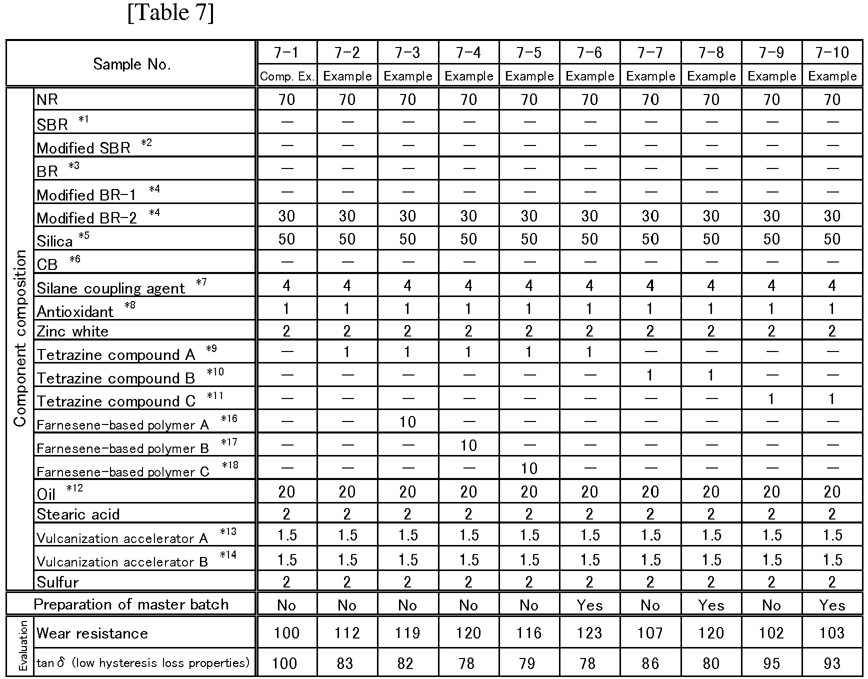

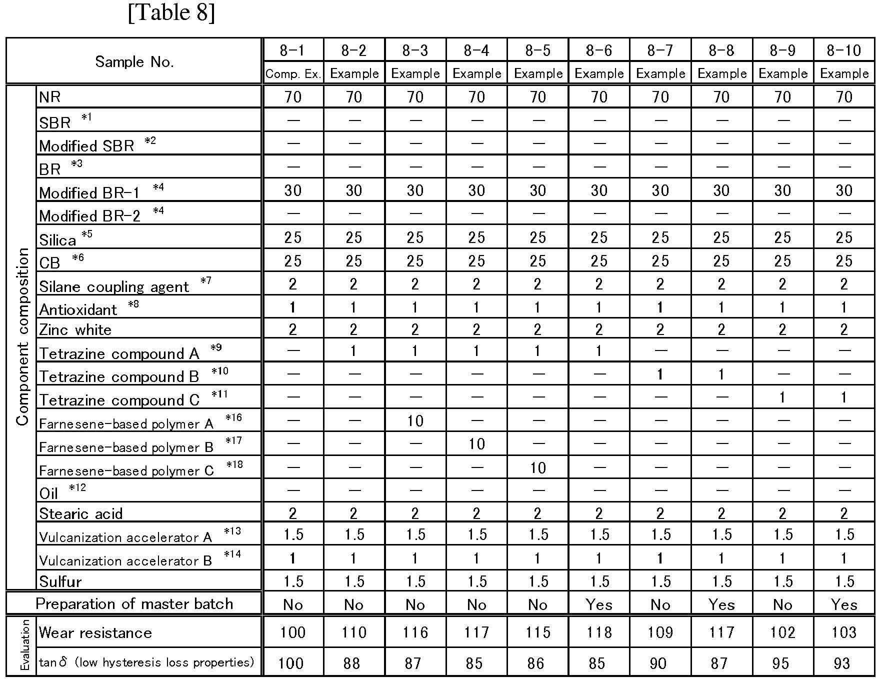

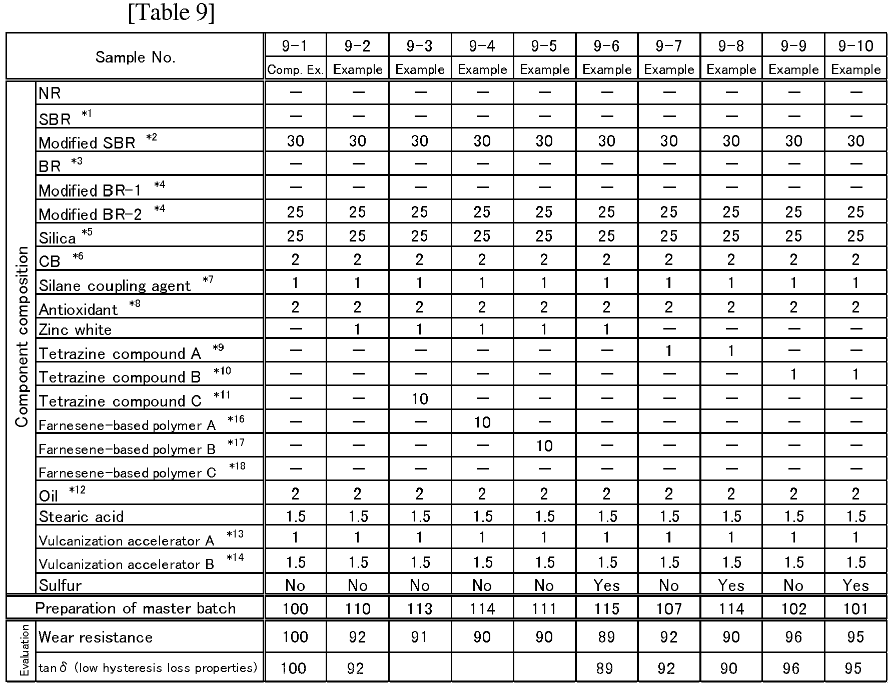

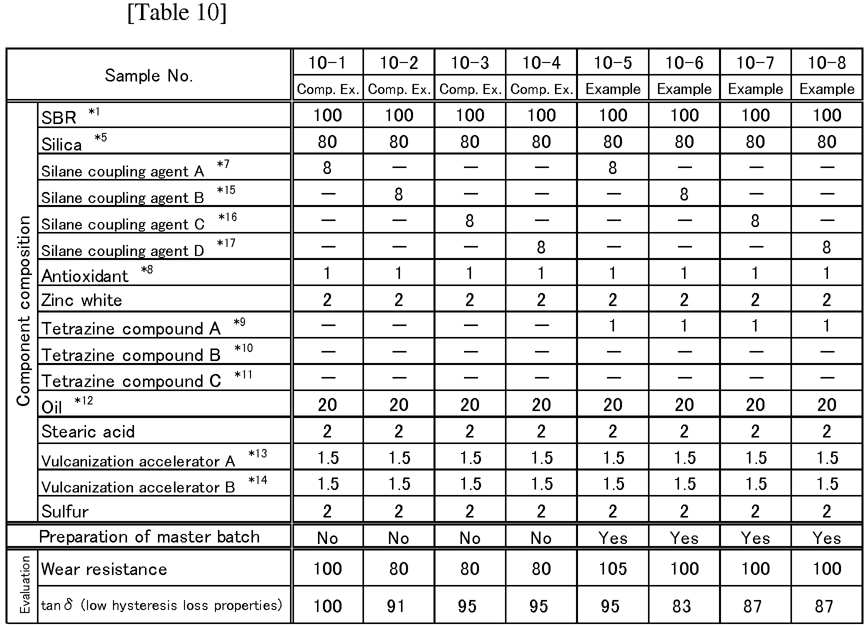

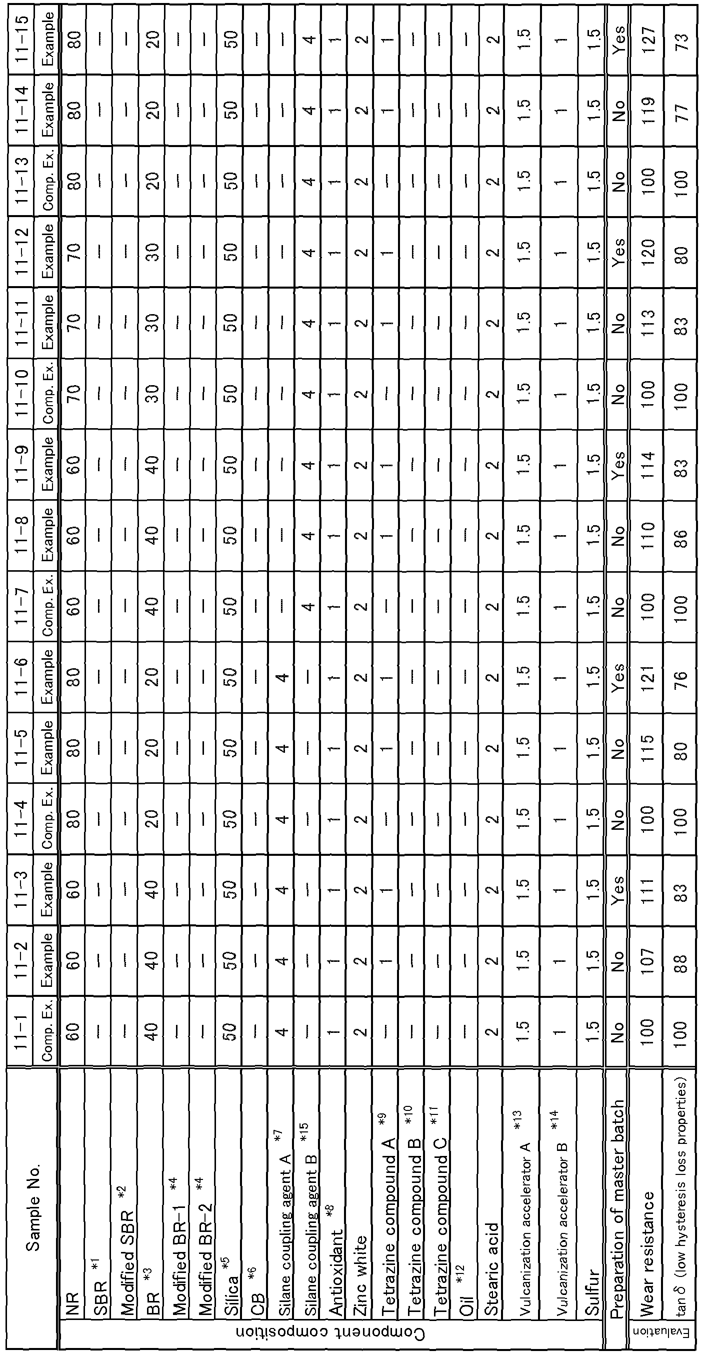

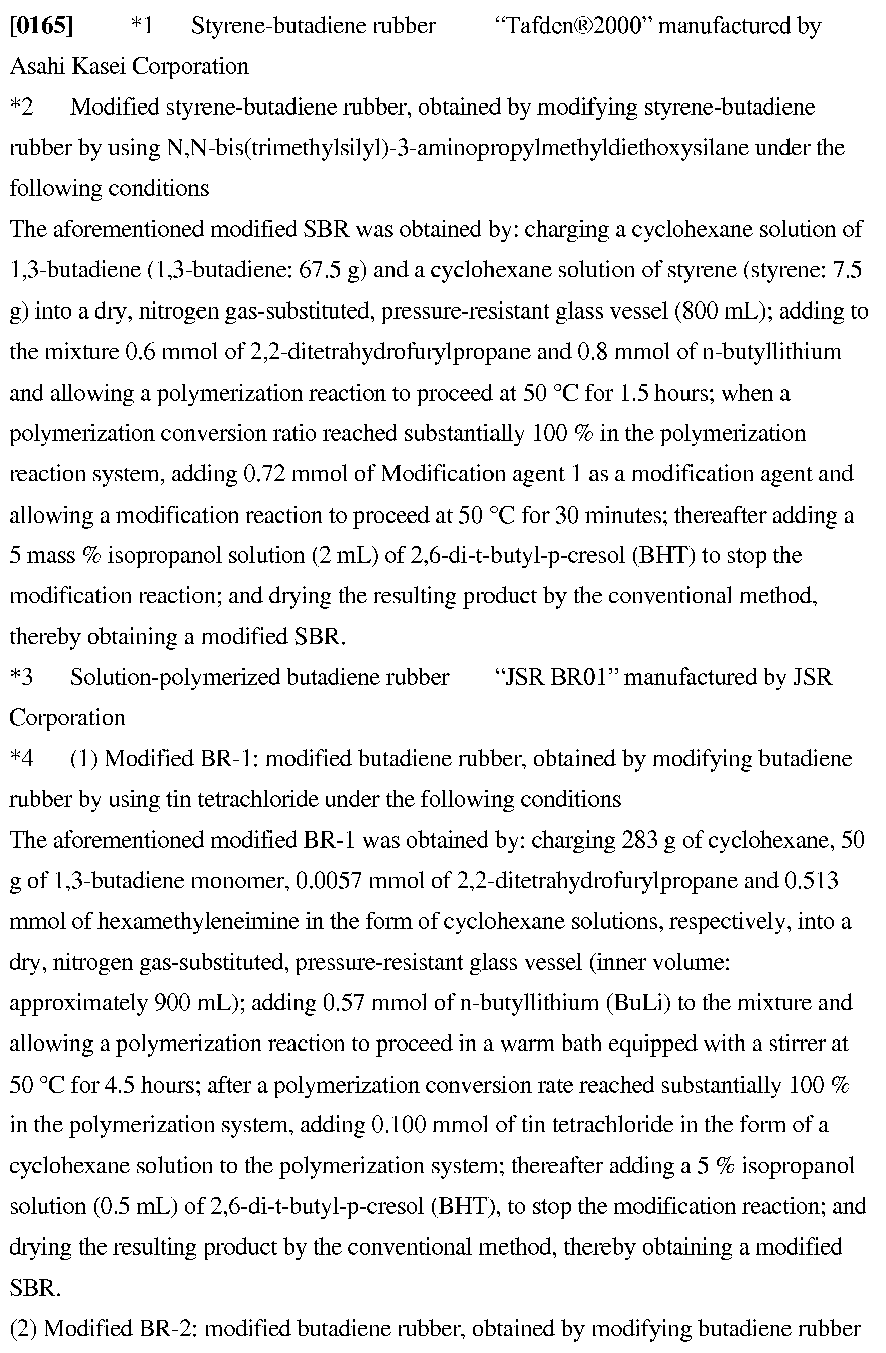

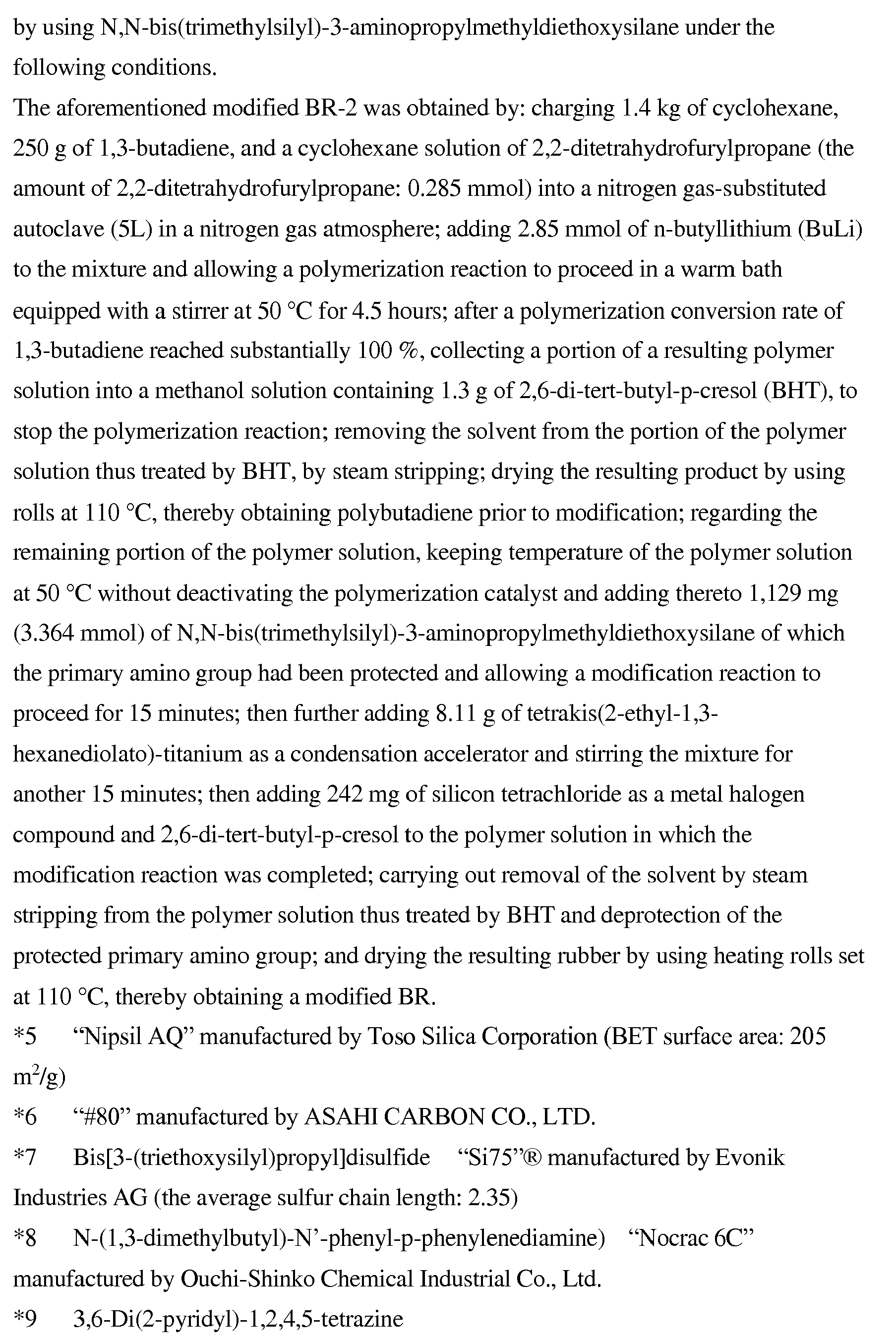

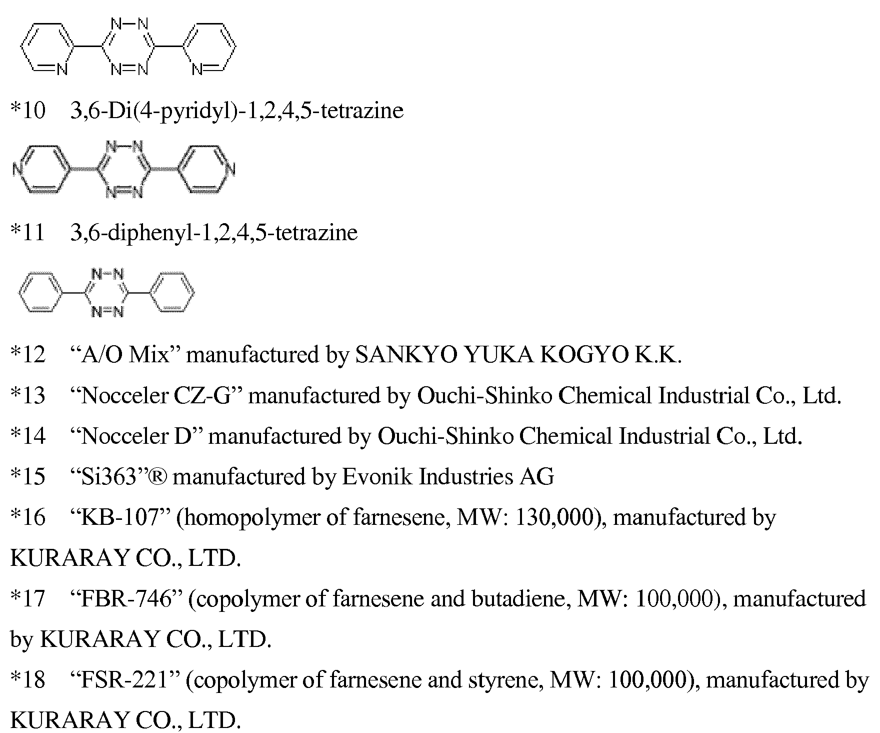

It is understood from the results shown in Tables 1 to 11 that the samples of Examples unanimously exhibit better results in both wear resistance and low hysteresis loss properties than the samples of Comparative Examples. Further, it is understood that the samples of Examples in which master batches were prepared in advance unanimously exhibit better results in both wear resistance and low hysteresis loss properties than the samples of Examples in which master batches were not prepared in advance.

### [Example Group 2]

### (Samples 1 to 11)

Samples of rubber compositions were prepared according to the blending formulations and the kneading methods shown in Table 12. The maximum temperature of a mixture at the first kneading step, of each of the samples, is shown in Table 1. The second kneading step was carried out after the first kneading step in preparation of these samples of rubber compositions. A Banbury mixer was used for kneading.

### < Evaluation of performances >

### (1) Dynamic storage elastic modulus (E')

Dynamic storage elastic modulus (E') was measured for the rubber composition of each sample by: subjecting the rubber composition to vulcanization for 15 minutes at 160 °C, to obtain vulcanized rubber; and measuring dynamic storage elastic modulus (E') of the vulcanized rubber thus obtained, by using a spectrometer manufactured by Ueshima Seisakusho Co., Ltd. under the conditions of temperature: 30 °C, initial strain: 2%, dynamic strain: 1%, and frequency: 52 Hz.
The measurement result of each sample was converted to an index value relative to "100" being the measurement result of Sample 1, for evaluation. The index values are shown in Table 12. The larger index value represents the higher elasticity.

### (2) tanδ (tanδ at 60 °C)

Loss tangent (tanδ) was measured for the rubber composition of each sample by: subjecting the rubber composition to vulcanization for 15 minutes at 160 °C, to obtain vulcanized rubber; and measuring loss tangent (tanδ) of the vulcanized rubber thus obtained, by using a spectrometer manufactured by Ueshima Seisakusho Co., Ltd. under the conditions of temperature: 60 °C, initial strain: 2%, dynamic strain: 1%, and frequency: 52 Hz.
The measurement result of each sample was converted to an index value relative to "100" being the measurement result of Sample 1, for evaluation. The index values are shown in Table 12. The larger index value represents the better low heat generation properties.

### (3) Wear resistance

An amount of wear (mm³) was measured for each sample by: obtaining vulcanized rubber by vulcanizing the rubber composition of the sample at 160 °C for 15 minutes; cutting a disc-shaped test piece (diameter: 16.2 mm × thickness: 6 mm) out of the vulcanized rubber thus obtained; and carrying out the DIN wear test according to JIS-K6264-2:2005 at the room temperature, by using the test piece, to measure an amount of wear (mm³).
Wear resistance was then expressed by: calculating the invert of the wear amount thus measured; and converting the invert to an index value relative to the relevant invert of Sample 1 being "100". The larger index value represents the smaller wear amount and thus the higher wear resistance. The evaluation results are shown in Table 12.

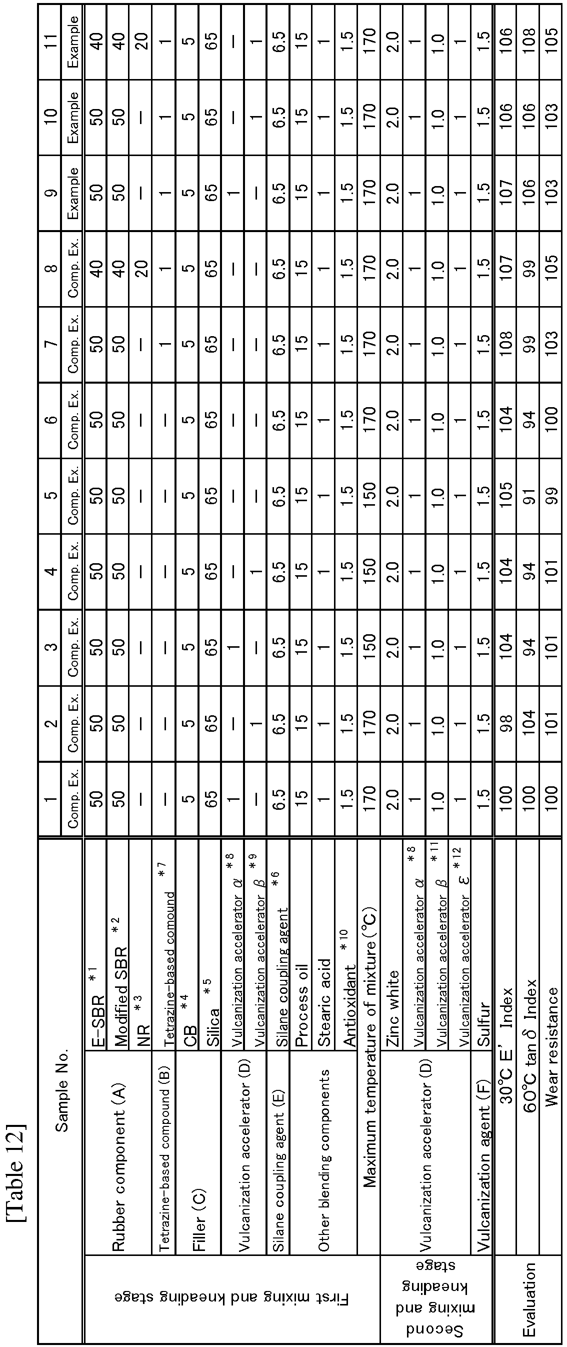

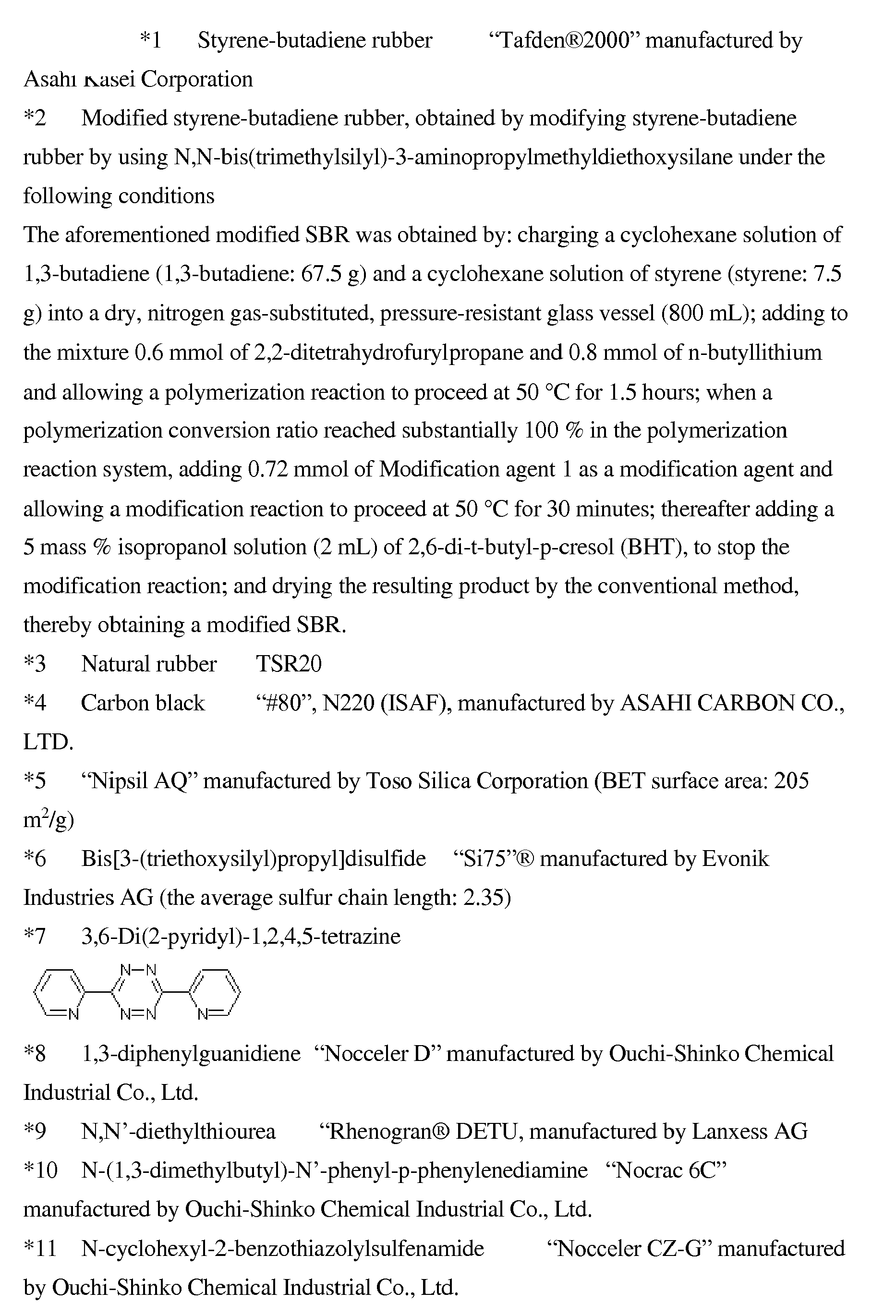

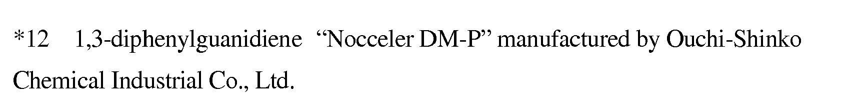

It is understood from the results shown in Table 12 that the samples of Examples unanimously exhibit better results in low hysteresis loss properties than the samples of Comparative Examples.

### INDUSTRIAL APPLICABILITY

According to the present disclosure, it is possible to provide a rubber composition having satisfactorily low hysteresis loss, while maintaining high wear resistance. Further, it is possible to provide a method for manufacturing a rubber composition, which method enables production of a rubber composition having satisfactorily low hysteresis loss and satisfactorily improved dispersibility of a filler, while maintaining high elasticity. Yet further, it is possible to provide a tire having high wear resistance and low rolling resistance in a compatible manner.

## Claims

1. A rubber composition, wherein it contains: a rubber component having diene-based rubber therein; and a tetrazine compound.

2. The rubber composition of claim 1, wherein the rubber composition further contains a reinforcing filler.

3. The rubber composition of claim 1 or 2, wherein the diene-based rubber contains butadiene rubber and/or styrene butadiene rubber.

4. The rubber composition of claim 3, wherein the diene-based rubber contains natural rubber and isoprene rubber.

5. The rubber composition of any of claims 1 to 4, wherein the diene-based rubber contains modified diene-based rubber.

6. The rubber composition of claim 2, wherein the reinforcing filler contains silica.

7. The rubber composition of claim 6, wherein a content of the silica in the reinforcing filler is equal to or higher than 70 mass %.

8. The rubber composition of claim 6 or 7, wherein the reinforcing filler further contains carbon black.

9. The rubber composition of any of claims 1 to 8, further containing farnesene-based polymer.

10. The rubber composition of any of claims 1 to 9, wherein a content of the tetrazine compound is in the range of 0.1 to 5 parts by mass with respect to 100 parts by mass of the rubber component.

11. The rubber composition of any of claims 1 to 10, wherein a substituent group in a tetrazine structure of the tetrazine compound has at least one element selected from N, O and F.

12. The rubber composition of claim 11, wherein the tetrazine compound is at least one selected from 3,6-Di(2-pyridyl)-1,2,4,5-tetrazine and 3,6-Di(4-pyridyl)-1,2,4,5-tetrazine.

13. The rubber composition of claim 6 or 7, wherein the rubber composition further contains a silane coupling agent, and the silane coupling agent is at least one selected from the group consisting of compounds represented by general formulae (I)-(IV) shown below.
**(R¹O)₃₋ₚ(R²)ₚSi-R³-Sₐ-R³-Si(OR¹)₃₋ᵣ(R²)ᵣ ···** **(I)**
(In general formula (I), R¹ represents C₁₋₈ normal, cyclic or branched alkyl group or C₂₋₈ normal or branched alkoxyalkyl group or hydrogen atom and, when a plurality of R¹ exists, R¹s may be of either the same type or different types; R² represents C₁₋₈ normal, cyclic or branched alkyl group and, when a plurality of R² exists, R²s may be of either the same type or different types; R³ represents C₁₋₈ normal or branched alkylene group and, when a plurality of R³ exists, R³s may be of either the same type or different types; the average value of "a" is in the range of 2 to 6; and "p" and "r" may be either the same number or different numbers, the average values thereof are in the range of 0 to 3, respectively, and p and r cannot be 3 simultaneously.) 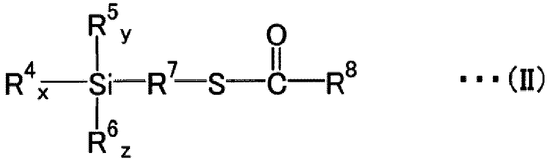 (In general formula (II), R⁴ represents a monovalent group selected from the group consisting of -Cl, -Br, R⁹O- R⁹C(=O)O-, R⁹R¹⁰C=NO- , R⁹R¹⁰CNO- , R⁹R¹⁰N-, and -(OSiR⁹R¹⁰)h(OSiR⁹R¹⁰R¹¹), wherein each of R⁹, R¹⁰ and R¹¹ is hydrogen atom or C₁₋₁₈ monovalent hydrocarbon group, and the average value of "h" is in the range of 1 to 4; R⁵ is either equal to R⁴ or hydrogen atom or C₁₋₁₈ monovalent hydrocarbon group; R⁶ is either equal to R⁴, R⁵ or hydrogen atom or -[O(R¹²O)j]_{0.5}- group, wherein R¹² represents C₁₋₁₈ alkylene group and "j" is an integer in the range of 1 to 4; R⁷ represents C₁₋₁₈ divalent hydrocarbon group; R⁸ represents C₁₋₁₈ monovalent hydrocarbon group; and x, y and z are numbers satisfying the relationships: x + y + 2z = 3, 0 ≤ x ≤ 3, 0 ≤ y ≤ 2, 0 ≤ z ≤ 1.)
**(R¹³O)₃₋ₛ(R¹⁴)ₛSi-R¹⁵-Sₖ-R¹⁶-Sₖ-R¹⁵-Si(OR¹³)₃₋ₜ(R¹⁴)ₜ ···** **(III)**
(In general formula (III), R¹³ represents C₁₋₈ normal, cyclic or branched alkyl group or C₂₋₈ normal or branched alkoxyalkyl group or hydrogen atom and, when a plurality of R¹³ exists, R¹³s may be of either the same type or different types; R¹⁴ represents C₁₋₈ normal, cyclic or branched alkyl group and, when a plurality of R¹⁴ exists, R¹⁴s may be of either the same type or different types; R¹⁵ represents C₁₋₈ normal or branched alkylene group and, when a plurality of R¹⁵ exists, R¹⁵s may be of either the same type or different types; R¹⁶ represents a divalent group selected from the group consisting of (-S-R¹⁷-S-), (-R¹⁸-Sₘ₁-R¹⁹-) and (-R²⁰-Sₘ₂-R²¹-Sₘ₃-R²²-), wherein each of R¹⁷-R²² is either C₁₋₂₀ divalent hydrocarbon group or a divalent aromatic group or a divalent organic group including a hetero element other than sulfur and oxygen therein, the average values of m1, m2 and m3 are in the range of ≥ 1 and < 4, respectively; a plurality of "k" may be the same number or different numbers and the average value of "k" is in the range of 1 to 6; and the average values of "s" and "t" are in the range of 0 to 3, respectively, and s and t cannot be 3 simultaneously.) 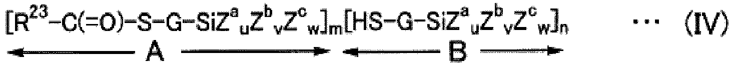 (In general formula (IV), R²³ represents C₁₋₂₀ normal, branched or cyclic alkyl group; a plurality of "G" represents C₁₋₉ alkanediyl groups or C₁₋₉ alkenediyl groups, respectively, and "G"s may be of either the same type or different types; each of "Z^{a}"s represents a functional group, which can be bonded to two silicon atoms and is selected from [-O-]_{0.5}, [-O-G-]_{0.5} and [-O-G-O-]_{0.5}, Z^{a}s may be of either the same type or different types; each of "Z^{b}"s represents a functional group, which can be bonded to two silicon atoms and is represented by [-O-G-O-]_{0.5}, Z^{b}s may be of either the same type or different types; each of "Z^{c}"s represents a functional group selected from the group consisting of -Cl, -Br, -OR^{a}, R^{a}C(=O)O-, R^{a}R^{b}C=NO-, R^{a}R^{b}N-, R^{a}-, and HO-G-O-("G" is defined in the same manner as described above), Z^{c}s may be of either the same type or different types; R^{a} and R^{b} represent C₁₋₂₀ normal, branched or cyclic alkyl groups, respectively; m, n, u, v and w are numbers satisfying the relationships: 1 ≤ m ≤ 20, 0 ≤ n ≤ 20, 0 ≤ u ≤ 3, 0 ≤ v ≤ 2, 0 ≤ w ≤ 1, and (u/2) + v + 2w = 2 or 3; when a plurality of "A" portion exists, "z^{a}ᵤ"s may be of either the same type or different types, "Z^{b}ᵥ"s may be of either the same type or different types, and "Z^{c}_{w}"s may be of either the same type or different types in the "A" portions; and when a plurality of "B" portion exists, "Z^{a}ᵤ"s may be of either the same type or different types, "Z^{b}ᵥ"s may be of either the same type or different types, and "Z^{c}_{w}"s may be of either the same type or different types in the "B" portions.)

14. A method for manufacturing a rubber composition, wherein the method includes a process of kneading ingredients consisting of a rubber component having diene-based rubber therein, a reinforcing filler, and a tetrazine compound.

15. A method for manufacturing a rubber composition, wherein the method includes a kneading process of kneading ingredients consisting of a rubber component (A) containing diene-based rubber therein, a tetrazine compound (B), a reinforcing filler (C) containing silica, at least one vulcanization accelerator (D) selected from the group consisting of guanidines, sulfenamides, thiazols, thiurams, dithiocarbamates, thioureas and xanthates, a silane coupling agent (E), and a vulcanization agent (F),
wherein the kneading process includes: a first kneading step in which the rubber component (A), the tetrazine compound (B), the reinforcing filler (C), at least a portion of the vulcanization accelerator (D) and at least a portion of the silane coupling agent (E) are kneaded; and a second kneading step in which a kneaded substance obtained by the first kneading step is kneaded with the vulcanization agent (F).

16. The method for manufacturing a rubber composition of claim 15, wherein the first kneading step includes a process of preparing a preparatory master batch by kneading at least a portion of the rubber component (A) and the tetrazine compound (B) prior to kneading them with silica contained in the reinforcing filler (C).

17. The method for manufacturing a rubber composition of claim 15 or 16, wherein the maximum temperature of the kneaded substance obtained by the first kneading step is in the range of 120 °C to 190 °C.

18. A tire, using the rubber composition of any of claims 1 to 13.

19. The tire of claim 18, wherein the rubber composition is applied to tread rubber, side rubber, side reinforcing rubber, cord-coating rubber, bead filler or rubber chafer.

20. The tire of claim 18 or 19, wherein the tire is applied to a tire for passenger vehicle, a studless tire, a run-flat tire, and a tire for truck and bus.
